# EUROPEAN PATENT SPECIFICATION

(11) **EP 4 042 135 B1**
(45) Date of publication and mention of the grant of the patent: **10.04.2024**
(21) Application number: 20874972.1
(22) Date of filing: 09.10.2020
(51) Int. Cl.: F27B 17/00, F27B 17/02, G01N 1/38, G01N 1/44, G01N 23/2202, G01N 21/31

(54) **APPARATUS AND METHOD FOR PREPARING AN ANALYTICAL SAMPLE**
VORRICHTUNG UND VERFAHREN ZUR HERSTELLEN EINER ANALYTISCHEN PROBE
APPAREIL ET PROCÉDÉ DE PRÉPARATION D'UN ÉCHANTILLON ANALYTIQUE

(30) Priority: 11.10.2019 US 201962914069 P
(43) Date of publication of application: 17.08.2022
(60) Divisional application: 24161604.4
(73) Proprietor: Materiaux Nieka Inc., Quebec QC G2J 1B8 (CA)
(72) Inventor: CROISETIERE, Louis, Stoneham, Québec G3C 2A1 (CA); BASLER, Alexis, St-Alban, Québec G0A 3B0 (CA); NOBLESSE, Arnaud, Quebec, Québec G1S 4S2 (CA); LEMELIN, Xavier, Lac Beauport, Québec G3B 0T2 (CA)
(74) Representative: Grosfillier, Philippe
(86) International application number: PCT/CA2020/051359
(87) International publication number: WO 2021/068079

(56) References cited:
- EP-A1- 0 517 685
- EP-A1- 3 283 866
- CA-C- 2 956 451
- US-A- 4 401 625
- US-A- 5 266 094
- LING MING-XING ET AL: "Sample Preparation and X-Ray Fluorescence Analysis of Sulfide Ores", ANALYTICAL LETTERS, vol. 47, no. 9, 13 June 2014 (2014-06-13), pages 1598-1605, XP055817069, US ISSN: 0003-2719, DOI: 10.1080/00032719.2013.876542 Retrieved from the Internet: URL:https://www.tandfonline.com/doi/pdf/10 .1080/00032719.2013.876542?needAccess=true >
- Ling Ming-Xing, Liu Ying, Zhang Hong, Sun Weidong: "Sample Preparation And X-Ray Fluorescence Analysis Of Sulfide Ores", Analytical Letters, vol. 47, 14 June 2014 (2014-06-14), pages 1598-1605, XP055817069,

## Description

### RELATED APPLICATION.

This patent application claims the benefit of U.S. Application Ser. No. 62/914,069 filed October 11, 2019.

### TECHNICAL FIELD

The technical field relates to the field of analytical sample preparation by flux fusion, such as borate fusion.

### BACKGROUND

Preparing an analytical inorganic sample (or mineral sample) using a fusion fluxer (also referred to herein simply as a "fluxer") includes multiple steps, manipulations and technical "know how". Fluxers are configured to raise the temperature of crucibles placed within a furnace in order to fuse a flux material (e.g., a borate flux material) to obtain a fused flux. An inorganic sample is solubilized in the fused flux to obtain a fused mixture suitable to prepare analytical samples. For example, the analytical sample can be a glass disk for X-ray fluorescence (XRF) analysis, a solution for inductively coupled plasma (ICP) analysis or a solution for atomic absorption (AA) analysis. Since the process temperature can be quite high, various problems and challenges can arise, such as contamination of the inorganic sample, among others.

EP 3 283 866 A1 discloses a fluxer including a single, wide furnace enclosure that is sufficiently large and prewired accommodate multiple fusion positions. The furnace includes at least one movable insulated partition that defines the actual insulated volume of the furnace.

EP 0 517 685 A1 discloses a method of producing amorphous sample bodies which can be used for optical spectral analysis and X-ray spectral analysis, by fusing an analysis sample together with flux and by introducing finely-divided SiO₂ in a quantity corresponding to from 1-100% of the sample quantity, prior to the fusion process. The article from Ling Ming-Xing ET AL: "Sample Preparation and X-Ray Fluorescence Analysis of Sulfide Ores", discloses a method of sample preparation and X-Ray fluorescence analysis of sulfide ores with varied concentrations, including four ore reference materials (zinc, copper, and iron sulfides) and two copper-nickel and iron sulfide samples.

Many challenges still exist in the field of analytical sample preparation by flux fusion.

### SUMMARY

According to a first aspect, the present invention relates to a fluxer for preparing an analytical sample by flux fusion as defined in independent claim 1. Dependent claims 2 to 9 define particular embodiments of the fluxer according to the present invention.

According to another aspect, the present invention relates to a method for preparing an analytical sample by flux fusion as defined in independent claim 10. Dependent claims 11 to 15 define particular embodiments of the method according to the present invention.

### BRIEF DESCRIPTION OF THE DRAWINGS

Figure 1 is a perspective view of a fluxer, according to an embodiment.
Figure 2 is a perspective view of a furnace assembly of the fluxer shown in Figure 1, showing a furnace chamber mounted on a furnace base, according to an embodiment.
Figure 3 is a side view of the furnace assembly shown in Figure 2.
Figure 4 is a perspective view of the furnace assembly shown in Figure 2, showing a door mechanism in a closed position, according to an embodiment.
Figures 5 and 6 are perspective views of the furnace assembly shown in Figure 2, showing the furnace chamber disconnected from the furnace base, according to possible embodiments.
Figure 7 is a rear perspective view of the furnace assembly shown in Figure 2, showing a back plate connected to the furnace base, according to an embodiment.
Figure 8 is a perspective view of a fluxer according to an embodiment, showing a support assembly positioned in front of the furnace assembly.
Figure 9 is a perspective view of the support assembly shown in Figure 8, showing a crucible support and a mold support according to an embodiment.
Figure 10 is a sectional view of the support assembly shown in Figure 9, showing latching mechanisms of the crucible and mold supports, according to an embodiment.
Figure 11 is a perspective view of the crucible support, showing a plurality of crucibles mounted in a side-by-side configuration according to an embodiment.
Figure 12 is a perspective view of a crucible holder according to an embodiment.
Figures 13 and 14 are enlarged views of the latching mechanism shown in Figure 10 in a closed and an open configuration, according to possible embodiments.
Figure 15 is a perspective view of the crucible support shown in Figure 11, showing the crucible holder removed from the latching mechanism, according to an embodiment.
Figure 16 is a perspective view of the fluxer, showing the support assembly shown in Figure 9 mounted on a pair of rails, according to an embodiment.
Figures 17 and 18 are perspective view of the fluxer shown in Figure 16, showing the support assembly moving towards the furnace chamber, according to an embodiment.
Figure 19 is a partially exploded view of the support assembly shown in Figure 9, showing a mixing mechanism disposed in the structure of the support assembly, according to an embodiment.
Figure 20 is a front view of an eccentric of the mixing mechanism shown in Figure 19, according to an embodiment.
Figure 21 is a perspective view of the support assembly shown in Figure 8, showing an alignment mechanism according to an embodiment, and showing the mold support in a first position.
Figure 22 is a perspective view of the support assembly shown in Figure 21, showing the mold support in a second position, according to an embodiment.
Figure 23 is a front elevation view of the support assembly shown in Figure 21.
Figure 24 is a front elevation view of the support assembly shown in Figure 22.
Figures 25 and 26 are enlarged views of the alignment mechanism shown in Figures 21 and 22, showing a pair of pivoting arms, according to an embodiment.
Figure 27 is a perspective view of the fluxer, showing a retaining rod positioned above the crucible support according to an embodiment.
Figure 28 is a perspective view of the fluxer shown in Figure 27, showing the crucibles abutting against the retaining rod, according to an embodiment.
Figure 29 is a side elevation view of the crucibles abutting against the retaining rod, according to an embodiment.
Figure 30 is a perspective view of the fluxer, showing a pre-heating compartment in a first position according to an embodiment.
Figure 31 is a perspective view of the fluxer, showing the pre-heating compartment shown in Figure 30 in a second position according to an embodiment.
Figure 32 is a side sectional view of the fluxer shown in Figure 31, showing the crucibles housed within the pre-heating compartment, according to an embodiment.
Figures 33 and 34 are perspective views of the pre-heating compartment shown in Figures 30 and 31, showing the various components of the compartment, according to possible embodiments.
Figures 35 and 36 are perspective views of a latching mechanism in a closed and an open configuration, according to alternate embodiment.
Figure 37 is a perspective cross-section view of the latching mechanism of Figure 35, in a closed configuration.
Figure 38 is a cross-section view of the latching mechanism of Figure 35, in a closed configuration.
Figure 39 is a partial perspective cross-section view of the latching mechanism of Figure 35, in a closed configuration, where several elements are omitted to better view the groove and recess system.

### DETAILED DESCRIPTION

As will be explained herein in relation to various embodiments, a fluxer for the preparation of inorganic analytical samples (or mineral analytical samples) is provided. The fluxer includes a furnace adapted to receive crucibles therein for heating the contents of the crucibles in order to prepare a fused mixture for analysis. An inorganic sample is solubilized in a fused flux to obtain a fused mixture suitable to prepare analytical samples. For example, the analytical sample can be a glass disk for X-ray fluorescence (XRF) analysis, a solution for inductively coupled plasma (ICP) analysis or a solution for atomic absorption (AA) analysis.

Broadly described, the fluxer includes a furnace assembly having a furnace chamber provided with heating elements, a sample support assembly adapted to support a plurality of crucibles in which the fused mixture can be generated, containers in which the fused mixture can be poured for cooling, and a motion system adapted to move the crucibles and/or containers within the furnace chamber for heating and fusing the contents of the crucibles. Once fused, the samples are transferred from the crucibles to the containers for cooling, and the analytical samples thereby obtained can be analyzed. For example, the containers can be molds in the case of XRF analysis to obtain glass disks, or beakers (or other types of containers) containing an acidic solution for ICP and/or AA analysis.

It should be understood that, as used herein, the expressions "fuse", "fusing", "fusion", or any other equivalent expression, refers to the process of melting one or more flux material in order to prepare a homogeneous, or near-homogeneous, mixture. It should also be understood that the material being fused generally includes a fusion flux compound or a mixture of several fusion flux compounds, such that the material to be analyzed can be solubilized upon fusion of the flux material.

In some embodiments, the flux material is a borate compound. In such case, the process can be referred to as a "borate fusion" process. Is should be understood that the borate fusion process can include various steps that can be implemented using a fluxer. In a non-limiting example, the borate fusion process can include the following steps:
- mixing of an inorganic analytical sample with a borate flux (typically lithium-based and/or sodium-based) in a crucible (for example a Pt crucible or a Pt-Au crucible);
- heating the mixture in the crucible to a temperature between 800°C and 1300°C, or between 1000°C and 1200°C, or between 1000°C and 1100°C, or at about 1050°C, with agitation until the borate flux melts and the inorganic sample dissolves homogeneously into the fused borate flux. It is understood that the temperature can be selected based on the type of flux material and/or the nature of the sample to be analyzed. The mixture thereby obtained can be referred to as a "fused mixture"; and
- The fused mixture can be poured into a container to be cooled and to obtain the analytical sample. For example, when the sample is to be prepared for XRF analysis, the fused mixture can be cast into a mold and cooled, to obtain a glass disk. In another example, the fused mixture can be poured into diluted acid to obtain an analytical sample that is a solution suitable for ICP analysis and/or for AA analysis.

As mentioned above, the flux material can be a borate compound. The more commonly used borate flux materials are selected from the group consisting of lithium tetraborate (Li₂B₄O₇), lithium metaborate (LiBO₂), sodium tetraborate (Na₂B₄O₇) and combinations thereof. The choice of flux material typically depends on the composition of the sample to be analyzed, as would be known to a person skilled in the art.

Additives can optionally be added to the flux material to modify their properties or to help oxidize partially oxidized elements that can be present in a sample to be analyzed. Non-limiting examples of additives that can be added include the following:
- absorbers such as La₂O₃, BaOz or SrO can be optionally be added to decrease the matrix effect by increasing X-ray absorption of the flux;
- fluidizers such as LiF can optionally be added for a potentially better transfer the fused mixture into the mold when preparing an analytical sample for XRF analysis;
- internal standards such as various oxides can optionally be added if required in the analytical technique chosen;
- oxidizing agent such as NH₄NO₃, NaNO₃, KNO₃, LiNO₃ or Sr(NO₃)₂ can optionally be added to oxidize non-oxidized and/or partially-oxidized inorganic compounds that may be present in the sample to be analyzed; and/or
- non-wetting agents such as NaBr, LiBr, KI, Csl, NH₄l or Lil can optionally be added to reduce stickiness to the crucible and allow easier casting.

In the present invention, the flux material/oxidizer/sample mixture need to be pre-treated to an oxidizing temperature (also referred to herein as a "pre-heating temperature") that is lower than the fusion temperature and at which oxidizing of the non-oxidized and/or partially-oxidized inorganic elements can occur. In the case of borate flux materials, the oxidizing temperature is set between 150°C and 1000°C.

For example, when ammonium nitrate is used, the pre-heating of the flux material/oxidizer/sample mixture can be performed at a temperature that decomposes the ammonium nitrate into NO₂ and HNO₃. At least one of these gases can then oxidize the non-oxidized and/or partially-oxidized inorganic elements present in the mixture.

In some embodiments, it can be desirable that a slow decomposition of the oxidizer occurs, as a slow decomposition typically allows for a longer action on the non-oxidized and/or partially-oxidized inorganic elements present in the mixture. A "slow decomposition" can for example be triggered by first subjecting the flux material/oxidizer/sample mixture to a first temperature that is lower than the temperature of the main fusion step in the furnace chamber. The decomposition of the oxidizer can then occur slower at the first temperature than if it had occurred directly at the fusion temperature. Subsequent oxidizing action on the non-oxidized and/or partially-oxidized inorganic elements being prolonged when performed at the first temperature compared to instances where the flux material/oxidizer/sample mixture is directly subjected to the fusion temperature.

It should also be understood that other types of flux materials can be used, such as a peroxide flux material (for example, sodium peroxide Na₂O₂). In such case, the mixture in the crucible can be heated between 450°C and 650°C with agitation until the peroxide flux melts and the inorganic analytical sample dissolves homogeneously in the fused peroxide flux.

In some embodiments, the material to be analyzed can include various inorganic materials (also referred to as mineral materials). Non-limiting examples of inorganic materials that can be subjected to the borate fusion process include cement, lime, carbonate, ceramic, glass, slag, refractory material, mining and geological materials, silicate, clay, ores, sulfides, fluorides, bauxite, aluminum, metal-based catalysts, steel, metals, ferroalloys, non-ferrous alloys and mineral/inorganic impurities contained in organic compounds such as polymers or pharmaceutical products.

In the present description, it should be understood that the process of "preparing an analytical sample by flux fusion" refers to a process including the steps of mixing an inorganic sample with a flux material, heating the mixture until the flux material melts and the inorganic sample dissolves into the fused flux material to obtain a fused mixture, and pouring the fused flux mixture into a container to be cooled and to obtain the analytical sample. Non-limiting examples of "flux fusion" include the "borate fusion" and the "peroxide fusion"

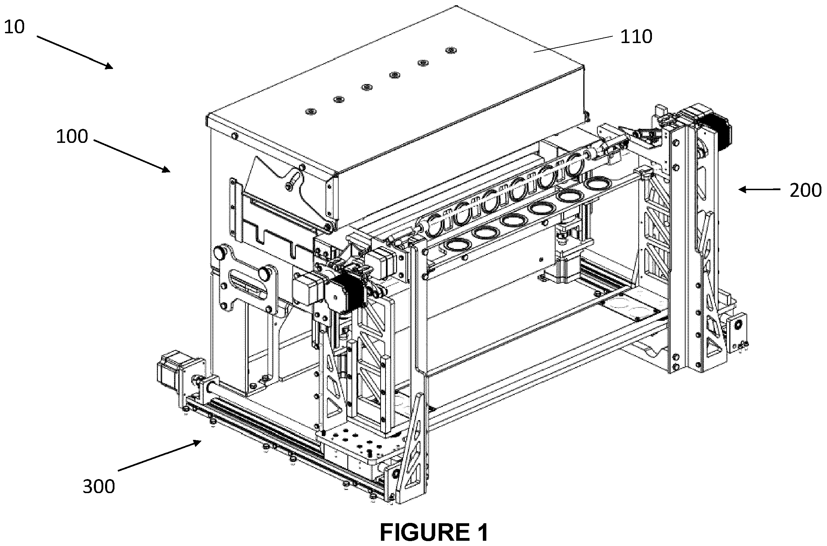

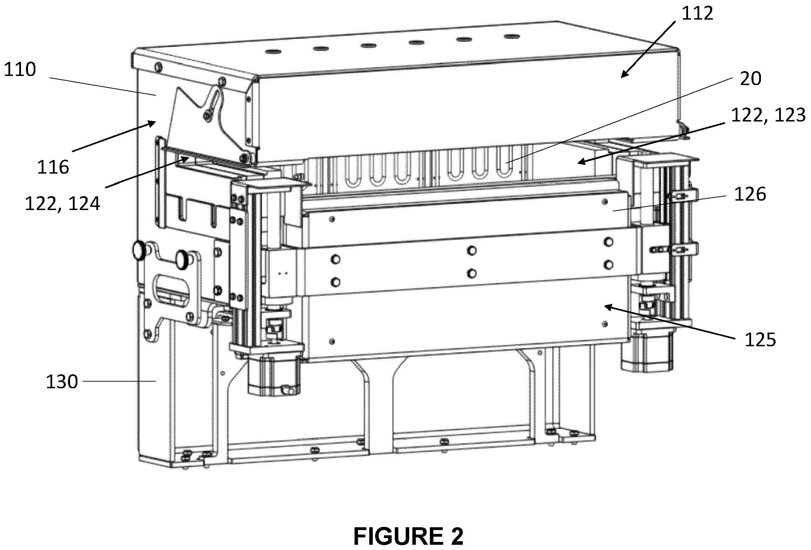

Referring to Figure 1, a fusion fluxer 10 (or simply "fluxer") in accordance with a possible embodiment is shown. The fluxer 10 includes a furnace assembly 100 for generating heat, a sample support assembly 200 and a motion system 300 adapted to move the support assembly 200. In this embodiment, the furnace assembly 100 includes a furnace chamber 110 provided with heating elements 20 (seen in Figure 2) configured to generate heat and raise the temperature of the interior volume of the furnace chamber 110. In the context of the present invention, the fluxer 10 refers to an electric fluxer, and wherein the at least one heating element is an electrical heating element.

Referring to Figures 2 to 7, in addition to Figure 1, the furnace chamber 110 illustratively has a generally rectangular shape, although it is appreciated that other configurations/shapes are possible. It is noted that the furnace chamber 110 has an interior volume defined by a front wall 112, a rear wall 114 opposite the front wall 112, side walls 116 extending between the front and rear walls 112, 114, and a top wall, or ceiling 118 opposite a bottom wall 120. The furnace chamber 110 further includes an access opening 122 which includes a front opening 123 defined on the front wall 112 for allowing the support assembly 200 to at least partially enter the furnace chamber 110 for heating and fusing samples for analysis. In this embodiment, the heating elements 20 are mounted within the furnace chamber 110 proximate the rear wall 114 (i.e., opposite the front opening 123), although other configurations are possible, such as providing heating elements on the side walls 116, or on the top and bottom walls 118, 120, for example.

In some embodiments, the front opening 123 can have a substantially rectangular, or channel-like shape, having a greater width than height, and can span across an entire width of the front wall 112. Furthermore, the access opening 122 can include lateral openings 124 extending on either side of the front opening 123, i.e., along the side walls 116 of the furnace chamber 110. As will be further described below, the lateral openings 124 can be shaped and configured to allow the support assembly 200 to move towards and within the furnace chamber 110, while having a portion thereof remain outside. In other words, the support assembly 200 can include a portion moving along the side walls 116 outside the furnace chamber 110, while having another portion within the interior volume of the furnace chamber 110.

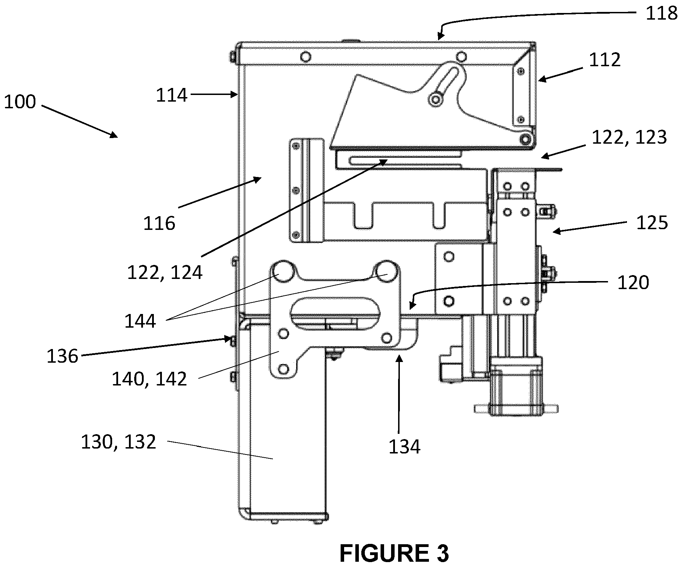

As seen in Figure 3, the lateral openings 124 can extend from the front wall 112 towards the rear wall 114 along a portion of the sidewalls 116. It should be understood that the length of the lateral openings 124 can correspond to the distance that the support assembly can travel within the furnace chamber 110. The support assembly can be adapted to abut against an end of the lateral openings 124, thus preventing further movement thereof towards the rear wall 114. It is appreciated that the access opening 122 can have any suitable shape and size to accommodate at least a portion of the support assembly for the preparation of fused samples for analysis.

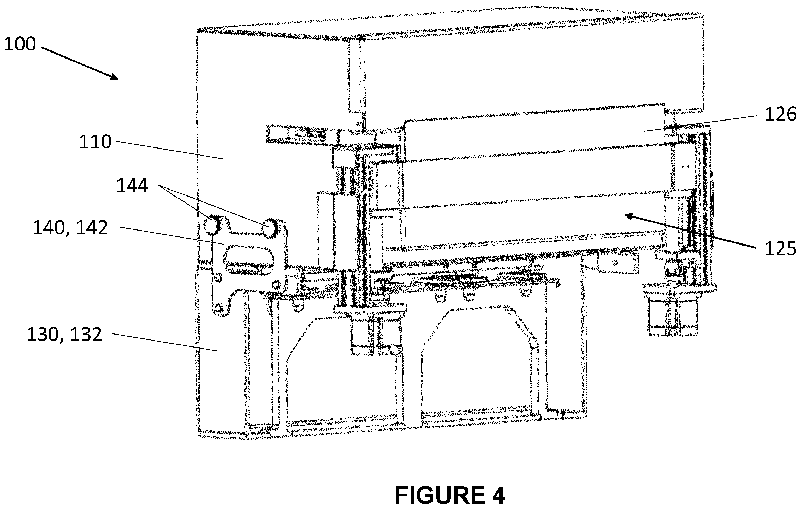

In this embodiment, the furnace chamber 110 includes a door, or door mechanism 125, configured to selectively block the access opening 122 and prevent components from entering (or exiting) the interior volume of the furnace chamber 110. As seen in Figures 2 and 4, the door mechanism 125 can include a panel 126 operatively mounted on the furnace chamber 110 and being movable between an open position (Figure 2) and a closed position (Figure 4). It should be understood that closing the access opening 122 (i.e., by moving the panel 126 in the closed position) can promote raising the temperature of the furnace chamber 110 since heat loss is prevented, or at least reduced. The panel 126 can be mounted on rails configured to allow the panel 126 to slide up and down between the open and closed positions. However, it is appreciated that any suitable door mechanism can be used for blocking the access opening 122, such as a pivoting or rotating door, or a panel sliding horizontally instead of vertically, for example.

As will be explained further below, the furnace chamber 110 can be removable from the furnace assembly 100 which can facilitate maintenance and/or replacement of the furnace chamber 110 without having to remove or replace the entire furnace assembly 100, for example. Still with reference to Figures 2 to 7, in some embodiments, the furnace assembly 100 includes a furnace base 130 positioned below the furnace chamber 110 to support the furnace chamber 110 in a generally elevated state. In other words, the furnace base 130 can be adapted to raise the furnace chamber 110 by a predetermined height (i.e., the height of the furnace base 130). It should be noted that the furnace base 130 can have any suitable shape, size and configuration adapted to support the furnace chamber 110 thereon. For example, in this embodiment, the furnace base 130 includes a foot member 132 adapted to extend below the furnace chamber 110. The furnace base 130 can be positioned in a manner such that the back of the foot member 132 is substantially aligned and parallel with the rear wall 114 of the furnace chamber 110.

Referring more specifically to Figures 3, 5 and 6, the furnace base 130 further includes a plate member 134 connected at a top end of the foot member 132 and extending transversely therefrom for at least partially supporting the furnace chamber 110. In this embodiment, the plate member 134 is substantially parallel to the bottom wall 120 and extends from the rear wall 114 towards the front wall 112. It is noted that the plate member 134 can have any suitable thickness adapted to effectively support the furnace chamber 110 and maintain structural integrity (e.g., prevent bending).

In the present embodiment, the furnace chamber 110 is removably connected to the furnace base 130 to allow removal of the furnace chamber 110 from the furnace assembly 100. More specifically, in this embodiment, the furnace chamber 110 is removably connected to the furnace base 130 via one or more connectors 140 adapted to hold the furnace chamber 110 in position relative to the furnace base 130 (e.g., on top of the furnace base 130). In the present embodiment, the furnace assembly 100 includes a pair of connectors 140 positioned on either side of the furnace chamber 110 to fasten the furnace chamber 110 to the furnace base 130. In some embodiments, the connectors 140 are secured to one of the furnace chamber 110 and furnace base 130, and are removably connected to the other one to allow the furnace chamber 110 to be removed.

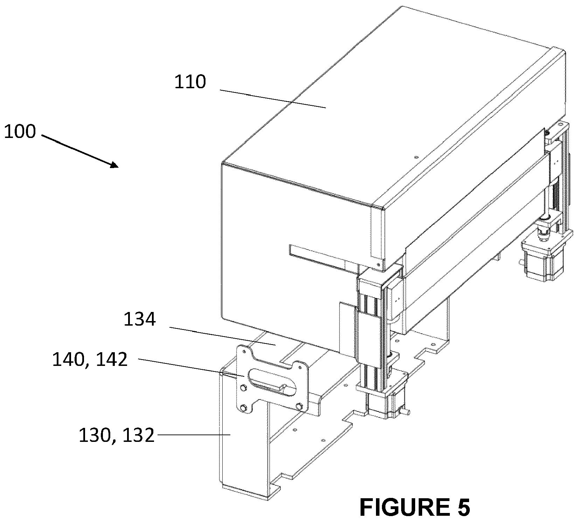

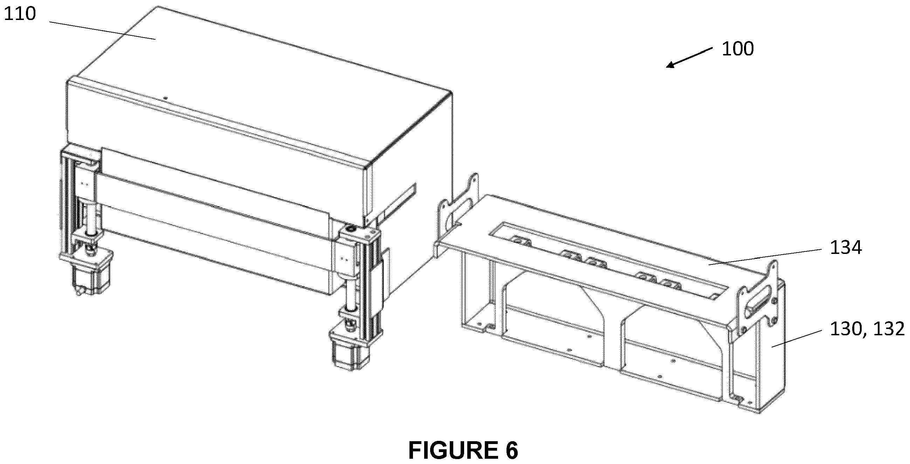

The connectors 140 can include a pair of brackets 142 secured to the furnace base 130 at a first end thereof, and removably connected to the furnace chamber 110 at a second end thereof. In this embodiment, the bracket 142 can be connected to the furnace chamber 110 and/or furnace base 130 at more than one location. For example, the bracket 142 can be shaped and sized such that it can be secured to both the foot member 132 and plate member 134, therefore preventing rotation of the bracket 142. As seen in Figures 5 and 6, the plate member 134 can have a bended forward section extending downwardly to facilitate connection of the bracket 142 to the plate member 134. The bracket 142 can be secured to the furnace base 130 using any suitable method, such as mechanical fasteners (e.g., bolts, nails, screws) or via an adhesive, for example.

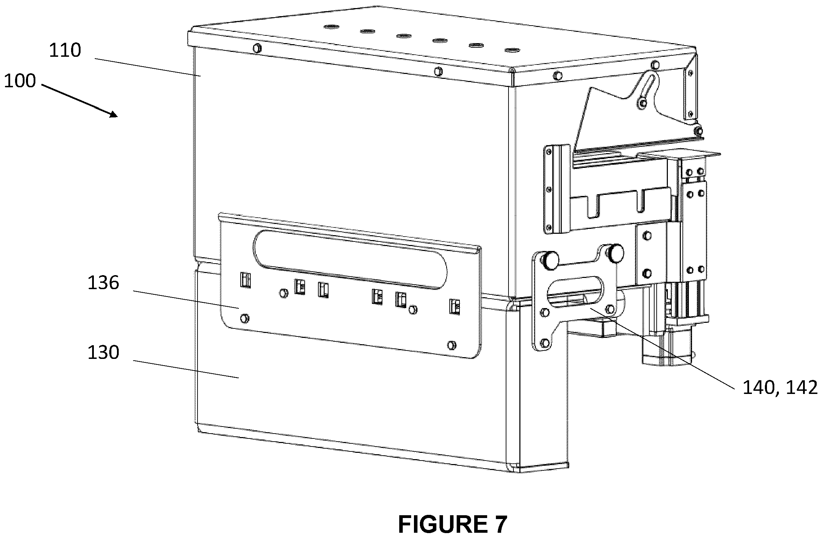

In this embodiment, the brackets 142 are removably connected to the furnace chamber 110 via removable mechanical fasteners, although other configurations are possible. More specifically, each bracket 142 is connected to the furnace chamber 110 at two separate locations via thumb screws 144, therefore allowing manual fastening and removal of the fasteners. It should thus be noted that the furnace chamber 110 can be fully disconnected from the furnace base 130 and removed from the furnace assembly 100 manually. In some embodiments, the furnace base 130 includes a backplate 136 adapted to assist in positioning the furnace chamber 110 on the furnace base 130. As seen in Figure 7, the backplate 136 can be secured to the back of the foot member 132 and extend upwardly such that a portion of the backplate 136 extends above the plate member 134. The furnace chamber 110 can then be positioned on the furnace base 130, with the rear wall 114 abutting against the back plate 136. It should thus be noted that the backplate 136, in combination with the brackets 142, can be adapted to properly position the furnace chamber 110 on the furnace base 130 prior to fastening the brackets 142 to the furnace chamber 110.

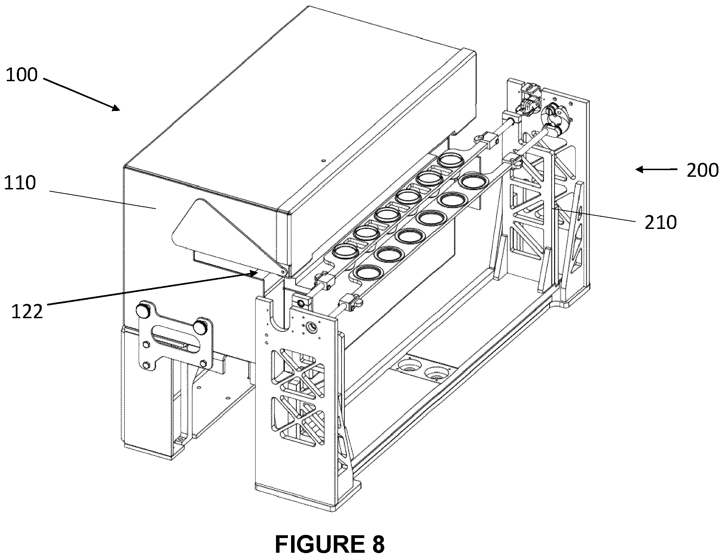

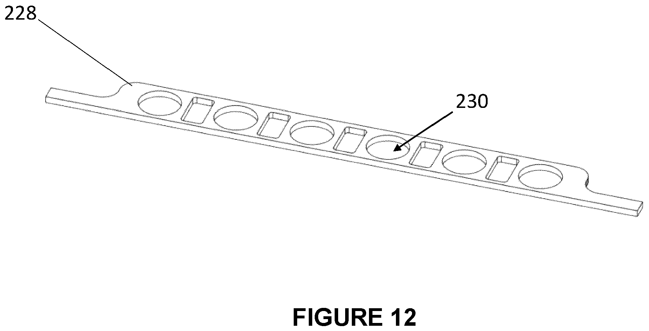

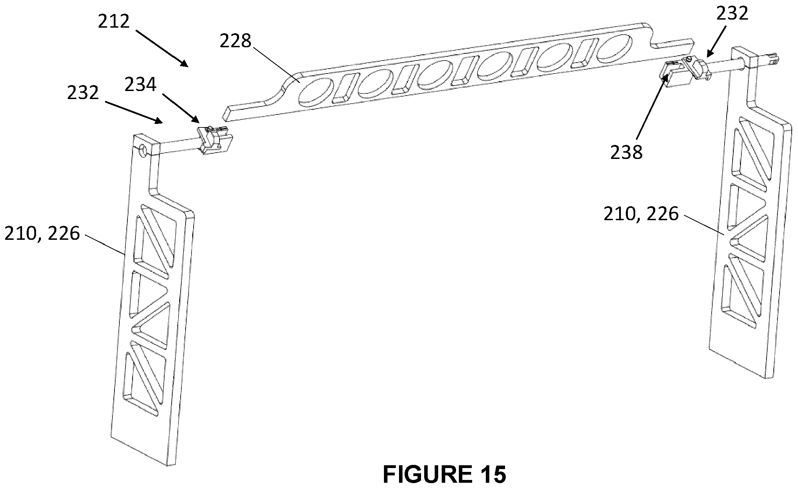

Now referring to Figures 8 to 15, in addition to Figure 1, the support assembly 200 will now be described. The support assembly 200 is preferably adapted to support a plurality of crucibles 30 and a corresponding number of molds 40, although it is appreciated that the support assembly 200 can alternatively be configured to support a single crucible 30, along with a single mold 40. As will be described further below, the support assembly 200 can be operatively connected to the motion system 300 in a manner such that the plurality of crucibles can be moved within the furnace chamber 110 to prepare the samples (i.e., to fuse the mixture within the crucibles). In addition, the support assembly 200 can be adapted to transfer the fused samples from the crucibles 30 to the molds 40, whereby the content of the molds 40 (i.e., the fused samples) can then be analyzed. In this embodiment, the support assembly 200 includes a support frame 210, a crucible support 212 connected to the support frame 210, and a mold support 214 also connected to the support frame 210 spaced from the crucible support 212.

In some embodiments, the crucibles are divided into multiple zones, with each zone including its own thermocouple. This can be useful in instances where some of the zones require a different amount of energy compared to other zones, to maintain the same temperature. For example, referring to Figures 8 to 15, six crucibles are shown. The first two crucibles starting from one end of the support assembly 200 can be part of a first zone, the two middle crucibles can be part of a second zone, and the last two crucibles can be part of a third zone. Each zone can be provided with a thermocouple and temperature can be independently controlled in each zone. This can allow for a more homogeneous temperature within the fusion chamber and/or the pre-heating compartment, as the zones located on a side typically require less energy than a middle zone to maintain a target temperature.

As seen in Figures 8 to 10, among others, the support frame 210 can be shaped and configured to support the crucible support 212 and mold support 214 in an elevated manner, such that the crucibles 30 are substantially aligned with the access opening 122 of the furnace chamber 110. Therefore, it is appreciated that displacing the support assembly 200 towards the furnace chamber 110 can move the crucibles support 212, and thus the crucibles 30, into the interior volume of the furnace chamber 110 (i.e., through the access opening 122). In this embodiment, the support frame 210 can include an outer frame 216 for supporting the mold support 214, and an inner frame 218 for supporting the crucible support 21. As will be described further below, the inner frame 218 is mounted on the outer frame 216 and is movable relative thereto. However, it is appreciated that the components of the support assembly 200 (e.g., crucible support and mold support) can alternatively be connected to the same portion of the support frame 210.

In some embodiments, the outer and/or inner frames 216, 218 can be substantially U-shaped, with a support base and sidewalls extending at either end of the corresponding support base. More specifically, the outer frame 216 has an outer support base 220 and outer walls 222 extending upwardly from either end of the outer support base 220. Similarly, the inner frame 218 has an inner support base 224 and inner walls 226 extending upwardly at either end of the inner support base 224. In some embodiments, the outer and inner walls 222, 226 are substantially parallel to each other, and the outer and inner support bases 220, 224 are also generally parallel to each other. It should be understood that the outer support base 220 is longer than the inner support base 224, and that the inner walls 226 are positioned between the outer walls 222. In other words, the outer frame 216 is shaped and sized to contain the inner frame 218 within its U-shaped structure.

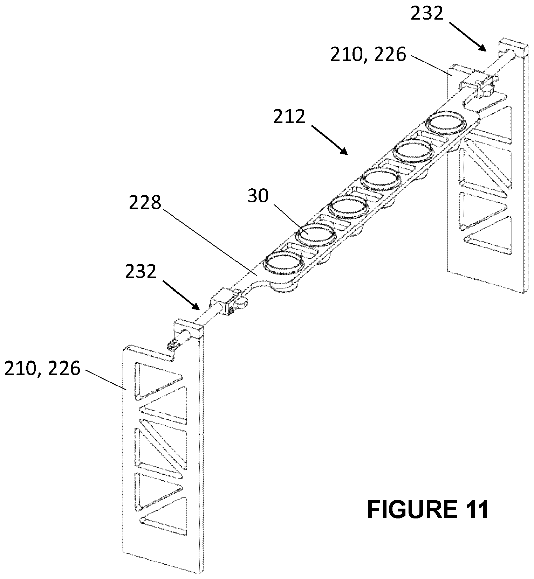

Now referring to Figures 11 to 15, in addition to Figure 8, the crucible support 212 can include a crucible holder 228 operatively connected to the support frame 210 at opposite ends thereof. The crucible holder 228 illustratively has an elongated shape provided with a plurality of crucible receiving apertures 230 (Figure 11) configured to receive and support the crucibles 30 in a side-by-side configuration. It should be understood that, as used herein, the expression "side-by-side configuration" generally refers to the crucibles being adjacent to other crucibles. For example, the crucibles can be axially aligned (as seen in Figure 11), offset with respect to one another, such as in a zig-zag pattern between the walls of the support frame 210, in a square pattern or in any other suitable configuration. For this reason, the expression "side-by-side configuration", as used herein, should not be taken as to limit the scope of the present disclosure as limiting the position of the crucibles and/or molds to being aligned along a common axis, but should encompass any other suitable configuration of the crucibles and/or molds with which the described embodiments could be used and may be useful. It should also be understood that each crucible 30 is adapted to receive a mixture of a sample material and a flux material for fusing within the furnace chamber 110.

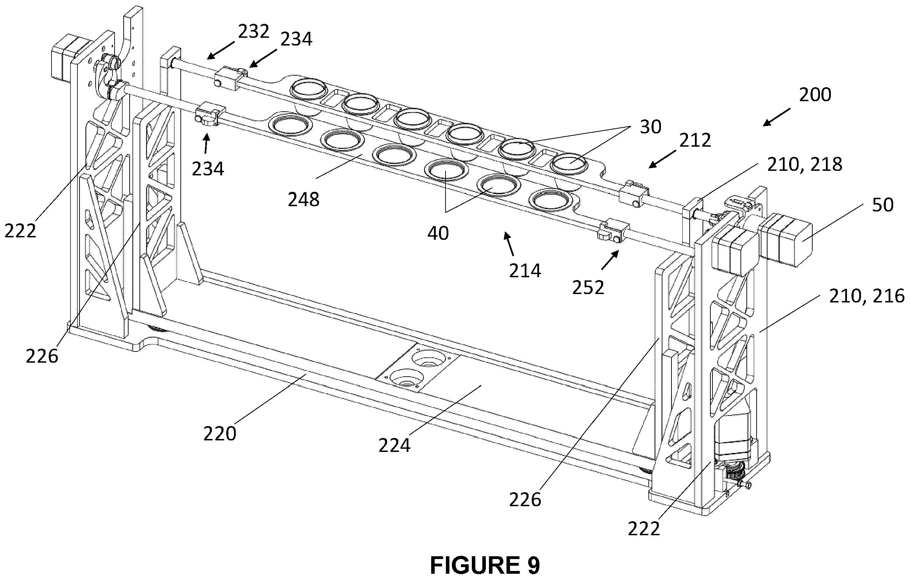

In some embodiments, the crucible holder 228 can be removably connected to the support frame 210 such that the crucibles 30 can be removed from the support assembly 200. As such, every crucible 30 can be manipulated together by installing and/or removing the crucible holder 228 from the support frame 210, advantageously preventing having to manipulate each crucible 30 individually. In this embodiment, the crucible support 212 includes a pair of crucible anchors 232 attached to the support frame 210 and to which the crucible holder 228 can be removably connected. As seen in Figures 9 to 11, the crucible anchors 232 can be connected to and extend from the support frame 210 opposite one another such that each end of the crucible holder 228 is connected to a corresponding one of the crucible anchors 232. More particularly, the crucible anchors 232 extend from the inner frame 218 opposite one another such that the crucible holder 228 is held in place between the inner walls 226.

The crucible anchors 232 can be pivotally connected to a corresponding inner wall 226 to allow rotation of the crucible holder 228 for pouring the fused samples from the crucibles 30 to the molds 40. In this embodiment, the crucible support 212 is provided with a motor 50 operatively connected to one of the crucible anchors 232 configured to engage the crucible anchor 232 in rotation. It is appreciated that the crucible support 212 can be provided with a pair of motors 50, i.e., each motor being operatively connected to a respective one of the crucible anchors 232, although a single motor 50 connected to a first crucible anchor 232 is possible, with the second crucible anchor 232 being pivotally connected to the corresponding inner wall 226.

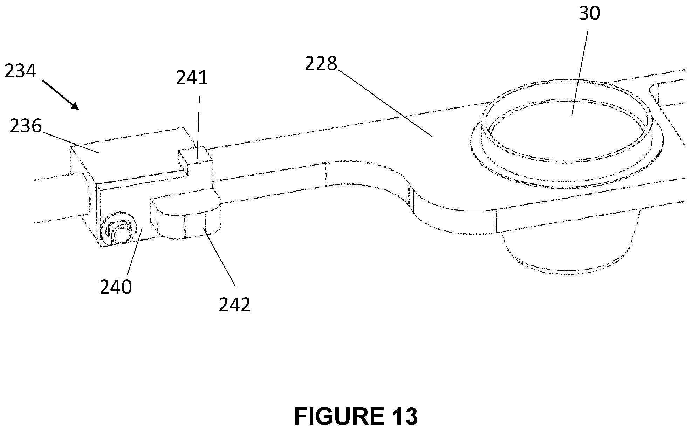

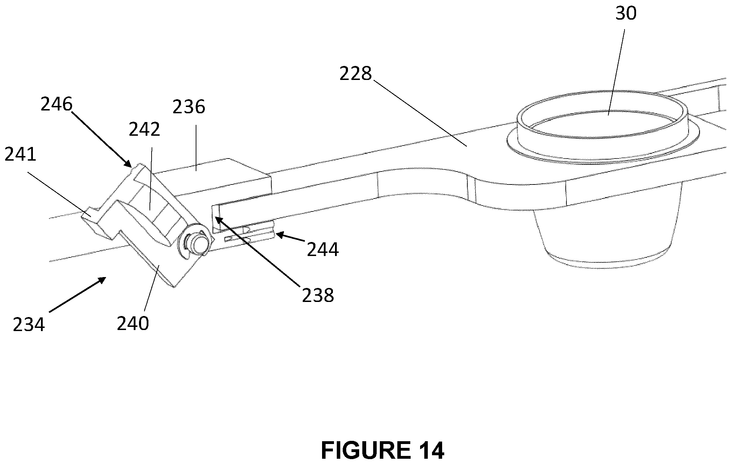

With reference to Figures 13 to 15, in some embodiments, the crucible anchors 232 can include a latching mechanism 234 adapted to selectively secure the crucible holder 228 to the crucible anchor 232. In this embodiment, each crucible anchor 232 includes a latching mechanism 234 for securing each end of the crucible holder 228 thereto, although it is appreciated that other configurations are possible, such as providing a latching mechanism 234 to a single crucible anchor 232, for example. In some embodiments, the latching mechanism 234 can be operable between a locked configuration (Figure 13) and an unlocked configuration (Figure 14). It should be understood that, when in the unlocked configuration, the crucible holder 228 can be coupled to and/or uncoupled from the crucible anchor 232, and that when in the locked configuration, the crucible holder 228 is secured to the crucible anchor 232 (if previously coupled thereto).

The latching mechanism 234 can be manually operable to facilitate removal and installation of the crucible holder 228 in the support assembly 200. In this embodiment, the latching mechanism 234 includes a latch body 236 having a recess 238 defined therein for receiving one end of the crucible holder 228. The recess 238 can be complimentarily shaped with respect to the end of the crucible holder 228 to promote cooperation therebetween. Once the end of the crucible holder 228 is inserted in the recess 238 of the corresponding latch body 236, the latching mechanism 234 can be moved to the locked configuration, thereby securing the end of the crucible holder 228 within the recess 238. In some embodiments, the latching mechanism 234 includes a latch cover 240 operatively connected to the latch body 236 and being operable to selectively cover the recess 238 and enclose the end of the crucible holder 228 therein. More particularly, in this embodiment, the latch cover 240 is pivotally connected to the latch body 236 and is pivotable between an open position, where the recess 238 is generally uncovered, and a closed position, where the recess 238 is occluded. It is appreciated that the locked configuration of the latching mechanism 234 corresponds to positioning the latch cover 240 in the closed position, and that the unlocked configuration of the latching mechanism 234 corresponding to positioning the latch cover 240 in the open position.

As mentioned above, the latching mechanism 234 is preferably manually operable, although it is appreciated that other configurations are possible. In this embodiment, the latch cover 240 is provided with a grip 242 extending from the latch cover 240 and being shaped and sized to be gripped to allow manually moving the latch cover 240. It is appreciated that the grip 242 can have any suitable shape, size or configuration to promote manually operating the latching mechanism 234. In addition, the latch cover 240 can be provided with a catch 241 extending therefrom for abutting against the latch body 236 upon positioning the latch cover 240 in the closed position. Therefore, movement of the latch cover 240 is blocked in a first direction when in the closed position and is allowed in a second direction in order to move back to the open position. In this embodiment, the catch 241 has an abutment surface extending generally transversely therefrom and over the latch body 236, although it is appreciated that other configurations are possible.

In some embodiments, the latching mechanism 234 can be provided with a retainment system configured to effectively retain the latch cover 240 in the closed position. For example, and as seen in Figure 14, the latch body 236 can include a groove 244 extending along an outer surface thereof proximate the recess 238, and the latch cover 240 can include a ridge 246 shaped and sized to be positioned within the groove 244 upon moving the latch cover in the closed position. As such, the latch cover 240 can be at least partially retained in the closed position via the cooperation of the ridge 246 and the groove 244. It is noted that the ridge 246 can be disengaged from the groove 244 upon the application of a rotational force on the latch cover 240 in order to move it to the open position. In this embodiment, the groove 244 is substantially parallel to the recess 238 of the latch body 236, although it is appreciated that other positions and configurations are possible. Moreover, the groove 244 can be defined as a depression extending along the latch body 236, or alternatively be defined between a pair of elongated protrusions extending upwardly from the outer surface of the latch body 236.

Although the above-described latching mechanism 234 includes a recess 238 defined in a body 236, with a pivotable latch cover 240 operable to block the recess 238, it should be appreciated that other mechanisms or devices are possible for locking the crucible holder in place among the support assembly 200. For example, the support frame 210 can be provided with snap-fit connectors or any other suitable quick-release mechanisms.

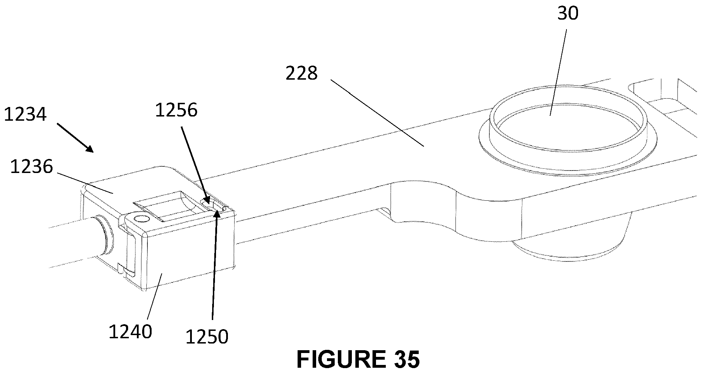

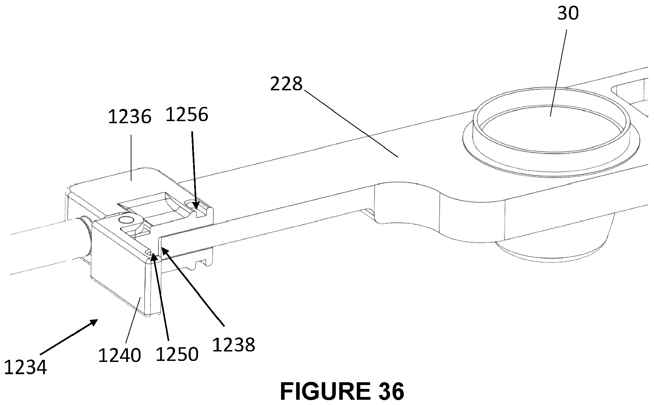

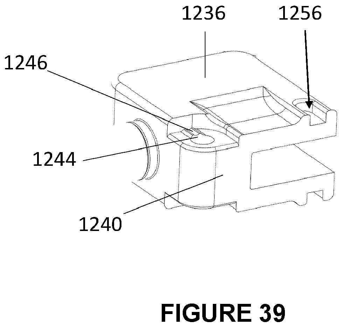

Now referring to Figures 35 to 39, in some embodiments, the crucible anchors 232 can include a latching mechanism 1234 adapted to selectively secure the crucible holder 228 to the crucible anchor 232. In this embodiment, each crucible anchor 232 includes a latching mechanism 1234 for securing each end of the crucible holder 228 thereto, although it is appreciated that other configurations are possible, such as providing a latching mechanism 1234 to a single crucible anchor 232, for example. In some embodiments, the latching mechanism 1234 can be operable between a locked configuration (Figure 35) and an unlocked configuration (Figure 36). It should be understood that, when in the unlocked configuration, the crucible holder 228 can be coupled to and/or uncoupled from the crucible anchor 232, and that when in the locked configuration, the crucible holder 228 is secured to the crucible anchor 232 (if previously coupled thereto).

The latching mechanism 1234 can be manually operable to facilitate removal and installation of the crucible holder 228 in the support assembly 200. In this embodiment, the latching mechanism 1234 includes a latch body 1236 having a recess 1238 defined therein for receiving one end of the crucible holder 228. The recess 1238 can be complimentarily shaped with respect to the end of the crucible holder 228 to promote cooperation therebetween. Once the end of the crucible holder 228 is inserted in the recess 1238 of the corresponding latch body 1236, the latching mechanism 1234 can be moved to the locked configuration, thereby securing the end of the crucible holder 228 within the recess 1238. In some embodiments, the latching mechanism 1234 includes a latch cover 1240 operatively connected to the latch body 1236 and being operable to selectively cover the recess 1238 and enclose the end of the crucible holder 228 therein. More particularly, in this embodiment, the latch cover 1240 is pivotally connected to the latch body 1236 and is pivotable between an open position, where the recess 1238 is generally uncovered, and a closed position, where the recess 1238 is occluded. It is appreciated that the locked configuration of the latching mechanism 1234 corresponds to positioning the latch cover 1240 in the closed position, and that the unlocked configuration of the latching mechanism 1234 corresponding to positioning the latch cover 1240 in the open position. As mentioned above, the latching mechanism 1234 is preferably manually operable, although it is appreciated that other configurations are possible.

In some embodiments, the latch body 1236 includes a first latch recess 1256 provided in a top surface of the latch body 1236, proximate to the end of the crucible holder 228, and the latch cover 1240 includes a first cover recess 1250. When the latch cover 1240 is in the closed configuration, the first cover recess 1250 aligns with the first latch recess 1256 and allows a user to insert a tool therein to conveniently open the latch cover 1240. In the embodiment shown, a second latch recess 1256 and a second cover recess 1250 can be provided.

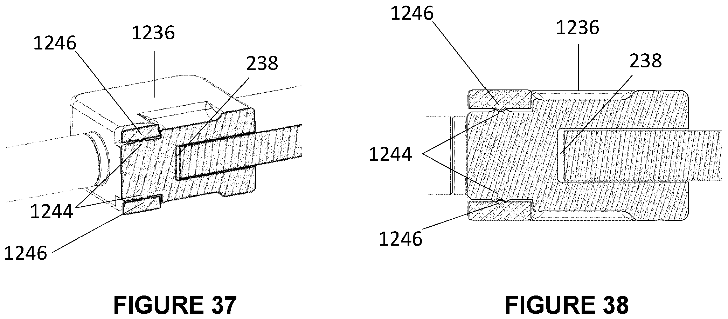

In some embodiments, the latching mechanism 1234 can be provided with a retainment system configured to effectively retain the latch cover 1240 in the closed position. For example, and as seen in Figures 37 to 39, the latch body 1236 can include a pair of grooves 1244 extending along an inner surface thereof proximate the recess 1238, and the latch cover 1240 can include a ridge 1246 shaped and sized to be positioned within the groove 1244 upon moving the latch cover in the closed position. As such, the latch cover 1240 can be at least partially retained in the closed position via the cooperation of the ridge 1246 and the groove 1244. It is noted that the ridge 1246 can be disengaged from the groove 1244 upon the application of a rotational force on the latch cover 1240 in order to move it to the open position. In this embodiment, the groove 1244 is substantially perpendicular to the recess 238 of the latch body 1236, although it is appreciated that other positions and configurations are possible.

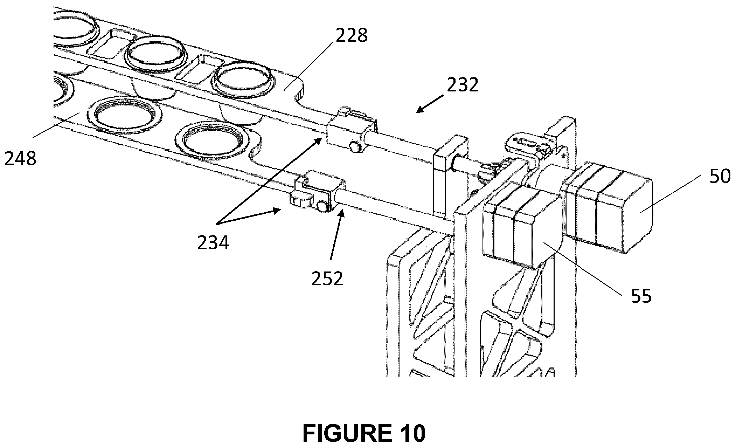

Referring back to Figures 9 and 10, the mold support 214 can have a similar configuration as the crucible support 212 described hereinabove. For example, the mold support 214 can include a mold holder 248 operatively connected to the support frame 210 at opposite ends thereof. The mold holder 248 can have an elongated shape provided with a plurality of mold receiving apertures configured to receive and support the molds 40 in a side-by-side configuration. It should be understood that each mold 40 is adapted to receive a fused sample from a corresponding one of the crucibles 30.

Furthermore, in some embodiments, the mold holder 248 can be removably connected to the support frame 210 such that the molds 40 can be removed from the support assembly 200. Therefore, every mold 40 can be manipulated together by installing and/or removing the mold holder 248 from the support frame 210, advantageously preventing having to manipulate each mold 40 individually. In this embodiment, the mold support 214 includes a pair of mold anchors 252 attached to the support frame 210 and to which the mold holder 248 can be removably connected. More specifically, each mold anchor 252 can be provided with a latching mechanism 234 similar to the one described above in relation with the crucible anchors 232, such as a latching mechanism 234 identical to the one described above in relation to the crucible anchors 232. As seen in Figures 9 and 10, the mold anchors 252 can be connected to and extend from the support frame 210 opposite one another such that each end of the mold holder 248 is connected to a corresponding one of the mold anchors 252. More particularly, the mold anchors 252 extend from the outer frame 216 opposite one another such that the mold holder 248 is held in place between the outer walls 222.

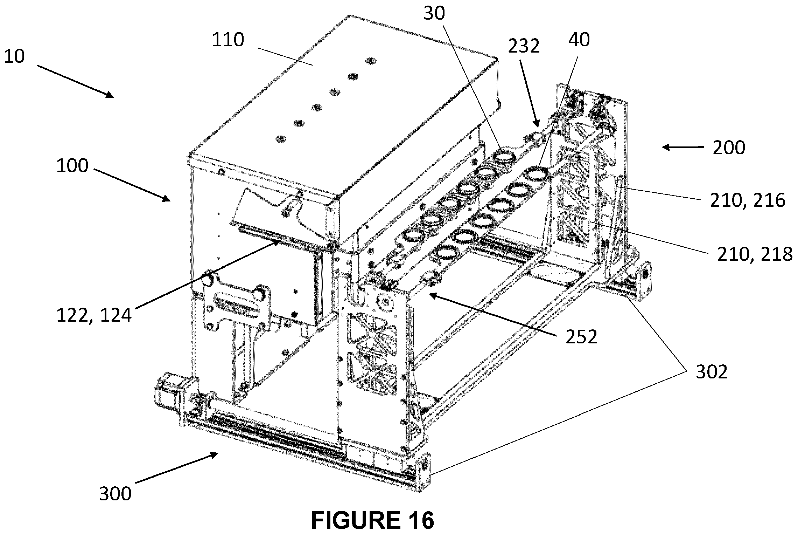

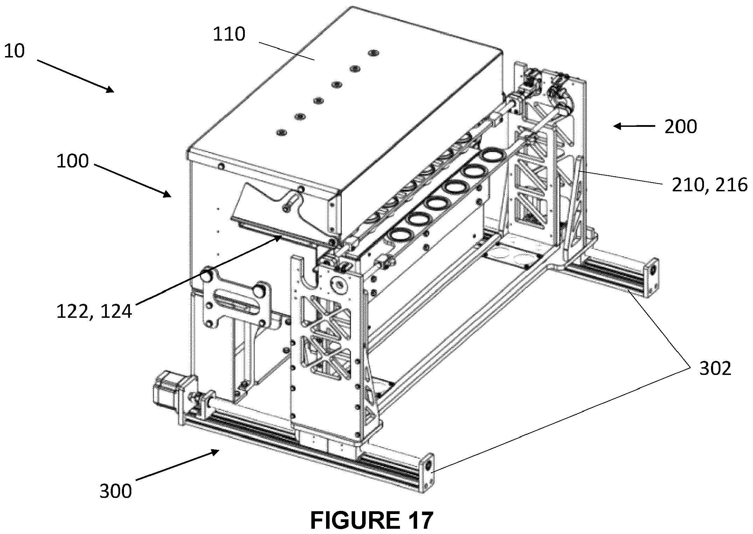

Now referring to Figures 16 to 18, in addition to Figure 1, the motion system 300 can include an axial displacement system configured to move the support frame 210, and thus the crucibles 30, towards the furnace chamber. It should be understood that the axial displacement system can be adapted to move the components connected thereto axially in any suitable direction. In this embodiment, the axial displacement system includes a pair of rails 302 extending on either side of the furnace assembly 100 and support assembly 200. In this embodiment, the support frame 210 is operatively mounted on the pair of rails 302 for moving it towards and/or away from the furnace chamber 110. More specifically, the outer frame 216 is slidably mounted to the pair of rails 302, with the outer support base 220 extending transversely between the rails 302. It is noted that the inner frame 218, being mounted on the outer frame 216, simultaneously moves along the rails 302 with the outer frame 216. In this embodiment, the support frame 210 is moved axially towards and away from the furnace chamber 110, although it is appreciated that other configurations are possible. As seen in Figures 16 to 18, the crucibles 30 can be inserted into the furnace chamber 110 through the access opening 122 by moving the support frame 210 along the rails 302.

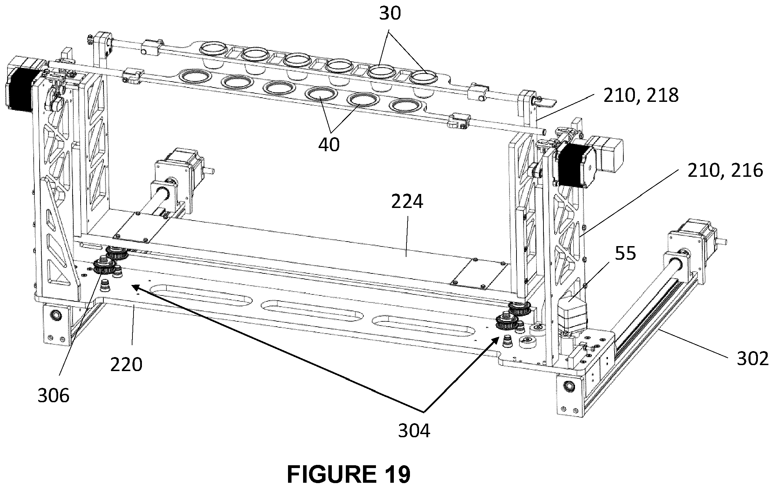

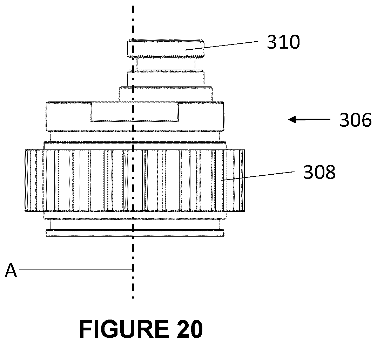

Referring to Figures 19 and 20, in addition to Figures 16 to 18, the crucibles 30 remain inside the furnace chamber 110 to allow the mixture contained within each crucible to fuse and form a fused sample for subsequent analysis. In order to facilitate fusing of the mixture, the motion system 300 can include a mixing mechanism 304 configured to move the crucibles 30 within the furnace chamber 110 in order to promote fusing of the mixture. In this embodiment, the mixing mechanism 304 includes one or more eccentrics 306 operatively connected to the support frame 210 and being operable to engage the crucibles 30 in a circular motion for mixing the mixture within the crucibles 30, thus promoting fusing. It should be understood that, as used herein, the term "eccentric" refers to a device configured to transform rotational movement into a backward-and-forward motion. In this embodiment, and as seen in Figure 20, each eccentrics 306 can be embodied by a disc, a gear, or a wheel 308, provided with an axle, or shaft 310, extending therefrom at a location offset from a center axis (A) of the wheel 308 and being connectable to the support frame 210.

The eccentrics 306 can be provided between the outer and inner support bases 220, 224, with the shafts 310 engaging the inner support base 224. Therefore, it should be understood that rotation of the eccentrics 306 engages the inner frame 218 in the circular motion and can maintain the outer frame 216 substantially motionless. In other words, the eccentrics 306 can be adapted to engage the crucibles 30 in the circular motion, while having the molds 40 remain motionless. In this embodiment, the circular motion is accomplished in a plane substantially perpendicular to the axis of the shafts 310 and substantially parallel to the outer and inner support bases 220, 224. However, it is appreciated that other means for providing a mixing motion to the crucibles is possible. For example, it is known to provide a rocking motion to the crucibles 30 by engaging the ends of the crucible holder 228 in a back-and-forth pivoting motion. It should be noted that the rocking motion can be combined with the circular motion provided by the eccentrics to further promote fusing of the mixture. Additionally, in this embodiment, the eccentrics 306 are engaged in rotation via a motor 55 operatively connected to one or more of the eccentrics 306, although other mechanisms for engaging the eccentrics in rotation are possible.

In some embodiments, the mixing mechanism 304 includes two pairs of eccentrics 306 disposed at opposite ends of the inner support base 224. It should be understood that more than two pairs of eccentrics may be used, such as 3, 4 or more pairs or eccentrics. Alternatively, the mixing mechanism can include a single pair of eccentrics. More specifically, each eccentric 306 can be provided proximate a respective corner of the inner support base 224 to ensure that the inner frame 218 is engaged in the circular motion along its entire width. In this embodiment, the eccentrics 306 can be adapted to rotate in a clockwise and/or a counterclockwise direction. It is appreciated that changing the direction of the circular motion when the crucibles 30 are inside the furnace chamber 110 can promote fusing the mixture, thus reducing the time required for preparing the fused samples. Additionally, rotating the eccentrics 306 (and thus the crucibles 30) at certain speeds can further promote fusing the mixture and reduce preparation time of the samples. In this embodiment, the eccentrics 306 are adapted to rotate at speeds between about 0 rpms and about 400 rpms. However, it is appreciated that other speeds are possible. Each eccentric 306 can be adapted to rotate at generally the same speed as the other eccentrics 306, and have their shaft 310 be synchronized with the other shafts 310 (i.e., each shaft 310 can be at the same relative position with respect to the center of the corresponding wheel 308). Therefore, the inner frame 218 remains substantially stable and parallel to the outer frame 216.

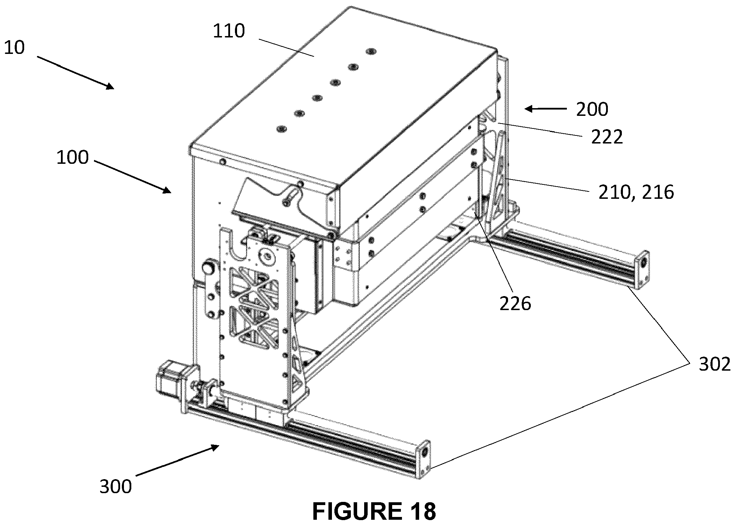

Referring back to Figures 16 to 18, it should be noted that the molds 40 are also moved with the support frame 210 and are similarly inserted into the furnace chamber 110 upon moving the support frame 210 towards the furnace chamber 110. The outer and inner frames 216, 218 are shaped and sized in a manner such that, when inserting the crucibles 30 and molds 40 into the furnace chamber 110, the inner and outer walls 222, 226 remain outside the furnace chamber 110, on either side thereof, as illustrated in Figure 18. It is appreciated that the lateral openings 124 of the access opening 122 allow the crucible anchors 232 and mold anchors 252 to at least partially move into the furnace chamber 110, while maintaining the inner and outer walls 222, 226 outside.

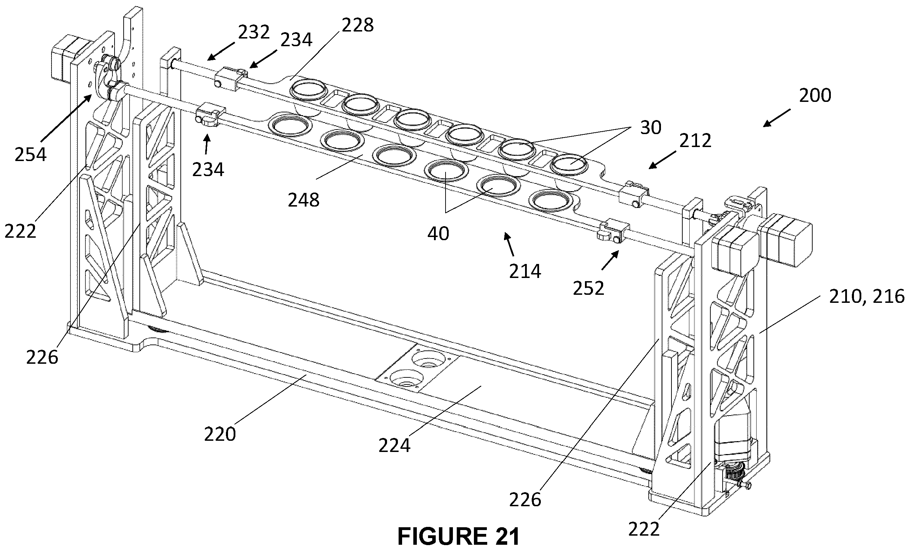

With reference to Figures 21 to 26, in addition to Figure 16, the mold support 214 can be provided with an alignment mechanism 254 configured to move the mold holder 248 vertically relative to the crucible holder 228 in order to align the mold holder 248 and crucible holder 228 in a common horizontal plane. In some embodiments, the size of the access opening 122 can be generally based on the distance between a top of the crucible support 212 and a bottom of the mold support 214 for allowing both the crucibles 30 and the molds 40 to be inserted within the furnace chamber 110. It should thus be noted that aligning the crucible and mold holders 228, 248 together advantageously allows for the size of the access opening 122 to be reduced. In some embodiments, the alignment mechanism 254 can be adapted to rotate the mold holder 248 about an axis which is offset relative to the longitudinal axis of the mold holder 248 in order to adjust the vertical position of the mold holder 248. However, it is appreciated that other configurations are possible for adjusting the position of the molds 40. For example, the alignment mechanism 254 can be adapted to axially move the mold holder 248 up and down (e.g., along rails) in order to adjust the vertical position of the molds 40.

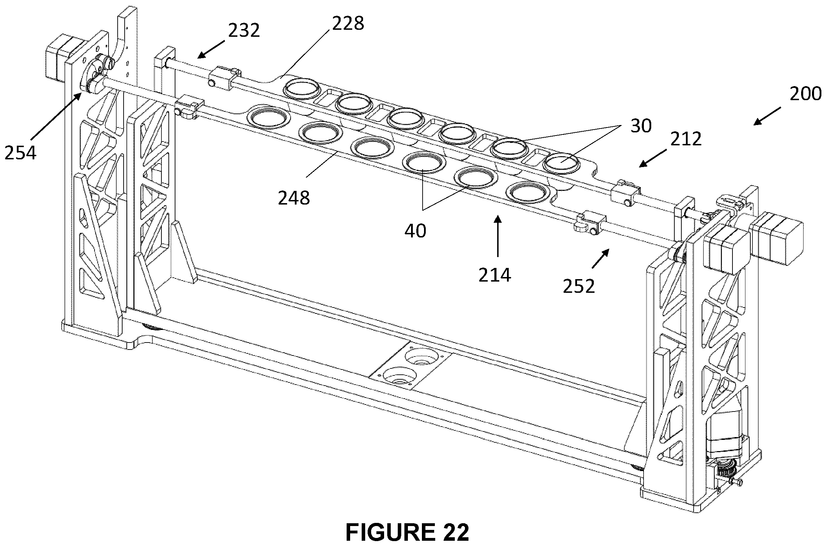

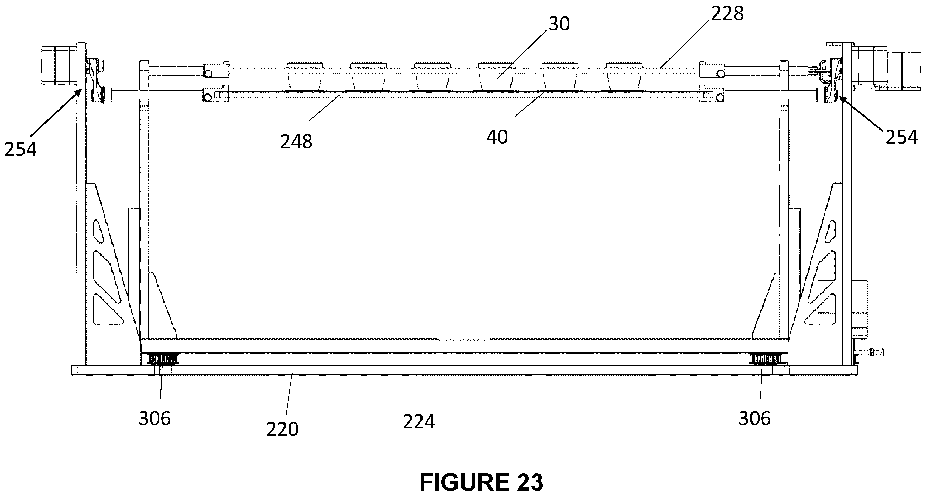

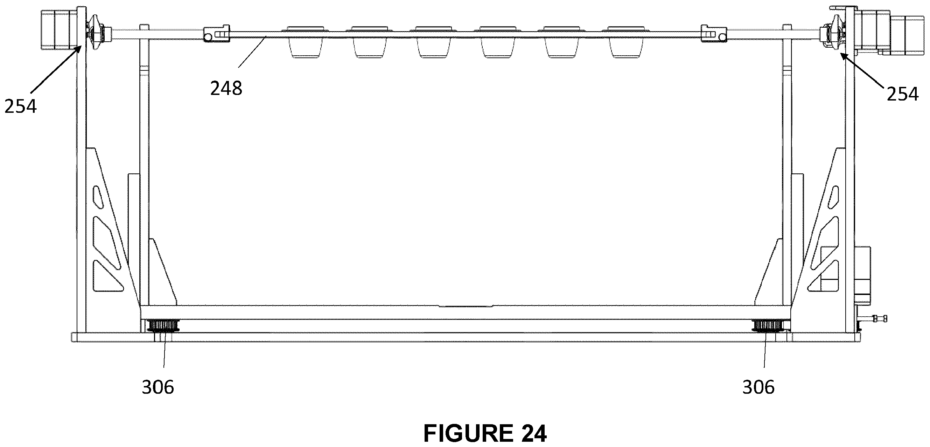

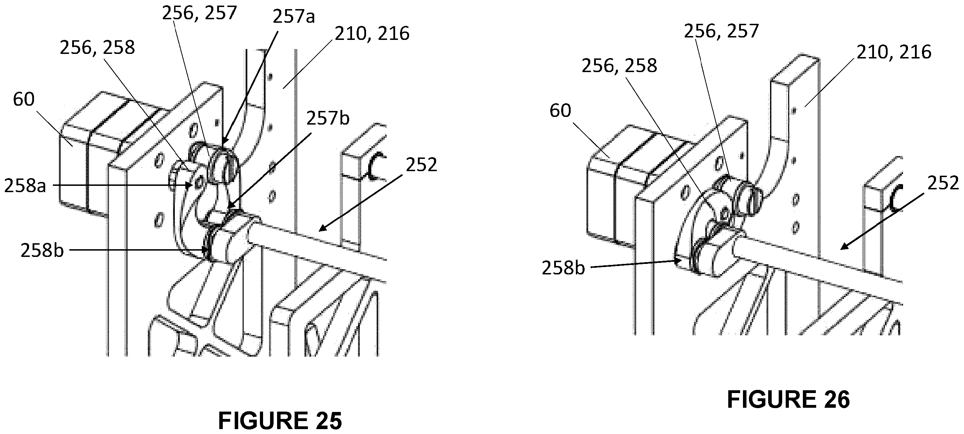

In some embodiments, the alignment mechanism 254 can be operated to move the mold holder 248 between at least a first position, where the molds 40 are vertically lower than the crucibles 30 (Figures 21 and 23), and a second position, where the molds 40 are substantially aligned with the crucibles 30 in a horizontal plane (Figures 22 and 24). It should be noted that the alignment mechanism 254 can be adapted to position the molds at any suitable position between the first and second positions. Referring more specifically to Figures 25 and 26, in this embodiment, the alignment mechanism 254 includes pivoting arms 256 positioned at each end of the mold holder adapted to pivotally connect the mold holder to the support frame 210 (i.e., to the outer frame 216). More specifically, the pivoting arms 256 are pivotally connected to the outer frame 216 at a first end thereof, and pivotally connected to the mold anchor 252 at a second end thereof. The pivoting arms 256 can be adapted to pivot about their first end, therefore rotating the mold holder 248 about an offset axis (i.e., the axis extending between the first ends at opposite ends of the mold anchor 252).

In this embodiment, the alignment mechanism 254 incudes two pairs of pivoting arms 256 connected to either end of the mold holder 248 (i.e, two pivoting arms 256 per end). More particularly, each pair of pivoting arms 256 include a first pivoting arm 257 and a second pivoting arm 258, both being pivotally connected to the mold holder 248 at respective second ends thereof 257b, 258b. In some embodiments, each pivoting arm 256 of a given pair can be mechanically linked to the other pivoting arm 256 of that same pair such that pivoting the first pivoting arm 257 engages the second pivoting arm 258 in rotation simultaneously. In this embodiment, the first pivoting arm 257 is operatively connected to a motor 60 at a first end 257a thereof and the second pivoting arm 258 is pivotally connected to the outer frame 216. The motor 60 can be mounted on the support frame 210 and is configured to engage the first end 257a of the first pivoting arm 257 in rotation.

The pivoting arms 256 can be connected to the mold anchor 252 in a manner whereby the mold holder is maintained substantially leveled during rotation thereof about the offset axis. In this embodiment, the second end of the first pivoting arm 257b and the second end of the second pivoting arm 258b are connected to the mold anchor 252 adjacent one another. Therefore, with the first and second pivoting arms 257, 258 being mechanically linked together to rotate substantially simultaneously, it should be understood that the second ends thereof remain aligned during rotation, thus maintaining the mold holder substantially leveled. It should however be appreciated that other mechanisms and/or configurations are possible for maintaining the mold holder 248 leveled during rotation thereof.

In the illustrated embodiment, the pivoting arms 256 are generally C-shaped although other shapes are possible. The first and second pivoting arms 257, 258 can be disposed in a "face-to-face" manner at each end of the mold holder 248. This configuration can allow the pivoting arms 256 of a given pair to interlock each other upon rotation of the first pivoting arm 257. In other words, the second end of one of the pivoting arms 256 can be shaped and sized to engage the central recessed portion of the other one of the pair of pivoting arms (depending on the direction of rotation), as seen in Figure 26.

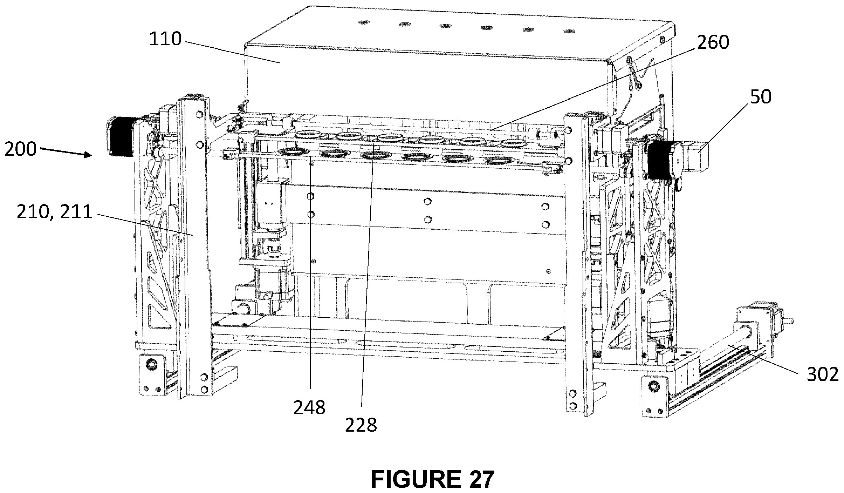

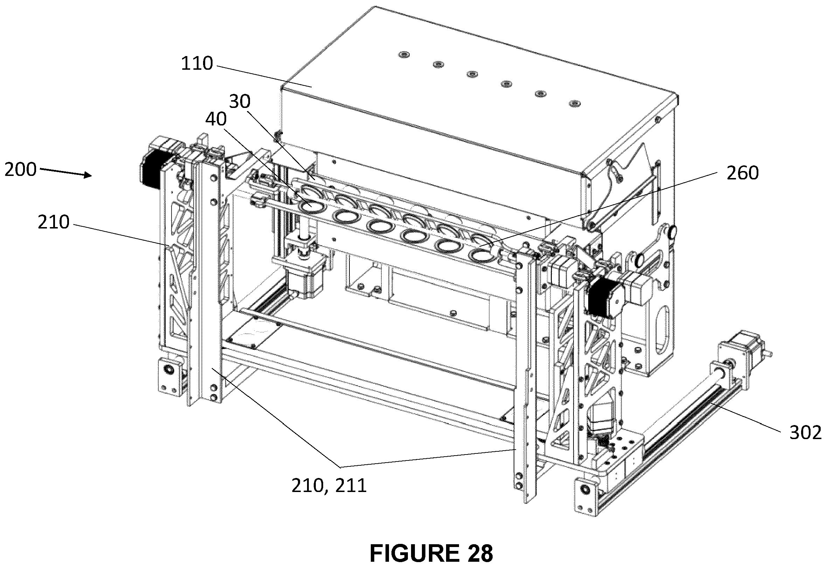

Referring to Figures 27 to 29, once the samples within the crucibles 30 have been fused, the support frame 210 is moved along the rails 302 away from the furnace assembly 100 to remove the crucibles 30 and molds 40 from the furnace chamber 110. The crucibles 30 can then be pivoted (e.g., via the motor 50) to pour the fused samples into the corresponding molds 40, as illustrated in Figure 28. In this embodiment, the support assembly 200 can include a retaining rod 260 shaped, sized and configured to retain the crucibles 30 in the crucible receiving apertures during rotation of the crucible holder 228. More specifically, in this embodiment, the retaining rod 260 is connected to the support frame 210 at opposite ends thereof and is positioned generally above the crucible holder 228. Therefore, when the crucible holder 228 is pivoted in order to pour the fused sample into the molds 40, the crucibles 30 abut against the retaining rod 260 to prevent the crucibles 30 from falling out of the crucible holder 228.

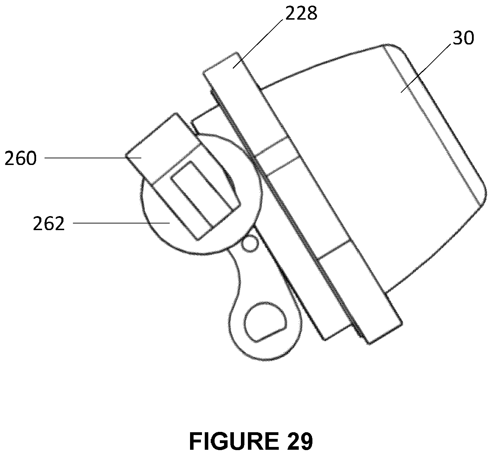

In some embodiments, the retaining rod 260 can be pivotally connected to the support frame 210 such that the retaining rod 260 can follow the rotational movement of the crucible holder 228 upon contacting the crucibles 30. In other words, the crucibles 30 can be adapted to push the retaining rod 260 during rotation of the crucible holder 228. In addition, the retaining rod 260 can be spring-loaded (e.g., via a torsion spring) and adapted to revert back to an initial position upon rotating the crucible holder 228 back to a substantially horizontal position. It should thus be understood that the spring-loaded retaining rod 260 can be adapted to apply a force on the crucibles 30 towards the crucible holder 228 in order to retain the crucibles 30 in the crucible receiving apertures 230 during rotation. Referring more specifically to Figure 29, the retaining rod 260 can include rod abutments 262 proximate the ends of the rod being shaped and sized to contact a top surface of the crucible holder 228 during transfer of the fused sample from the crucibles to the molds.

In this embodiment, the retaining rod 160 is connected to an independent portion of the support frame, or a secondary frame 211. More specifically, the secondary frame 211 is not connected to the outer and/or inner frames 216, 218, as described above. Therefore, it is understood that moving the outer frame 216 forward (i.e., towards the furnace chamber 110) along the rails 302 does not move the secondary frame 211, and therefore does not move the retaining rod 260. This configuration allows the retaining rod 260 to remain outside the furnace chamber 110 during the fusion of the mixture contained in the crucibles. It is appreciated that the secondary frame 211 is shaped and configured to position the retaining rod 260 at a predetermined position, whereby the crucibles 30 engage the retaining rod 260 when the crucible holder is retracted from within the furnace chamber 110 and pivoted to pour the fused samples into the molds. It should be noted that the retaining rod 260 can be made of any suitable material, such as alumina, stainless steel or nickel-based alloys for example. It is appreciated that having the retaining rod 260 remain outside the furnace chamber 110 advantageously allows for a wider range of materials to be used to make the retaining rod 260. Moreover, since the retaining rod 260 is not heated with the crucibles within the furnace chamber 110, the possibility of cross contaminating the fused samples is reduced since the heated crucibles do not abut against a heated retaining rod 260.

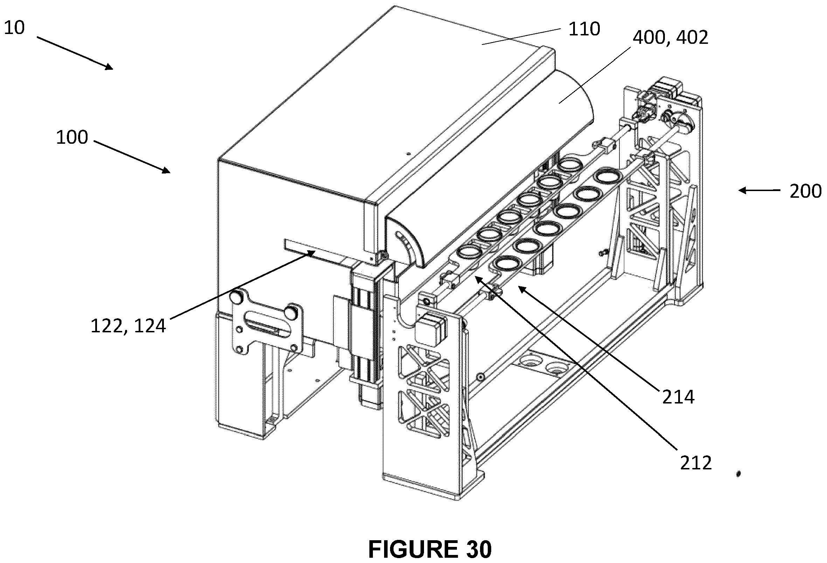

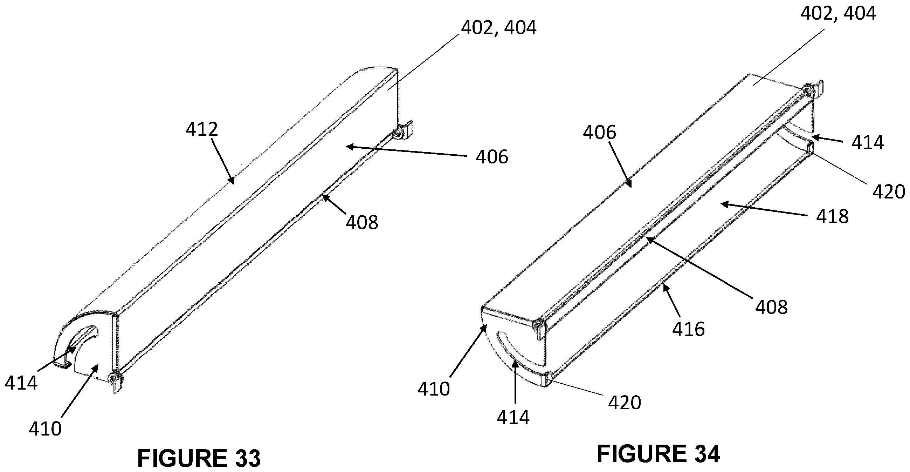

Now referring to Figures 30 to 34, the fluxer 10 can be provided with an enclosure 400, or partially isolated section, configured to pre-heat the crucibles 30 prior to moving the crucibles into the furnace chamber 110 for preparing the fused samples. Pre-heating the mixture within the crucibles 30 can reduce the time required for the temperature to reach the desired level, and thus reduce the time required by the mixture to fuse, among others. In some embodiments, the heating elements can require some time before generating the desired amount of heat. While the heating elements effectively heat up, the crucibles 30 can be placed within the enclosure 400 to pre-heat the mixture.

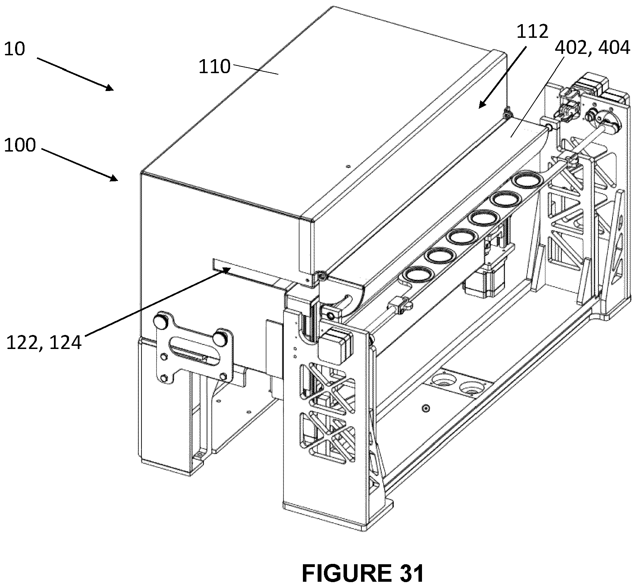

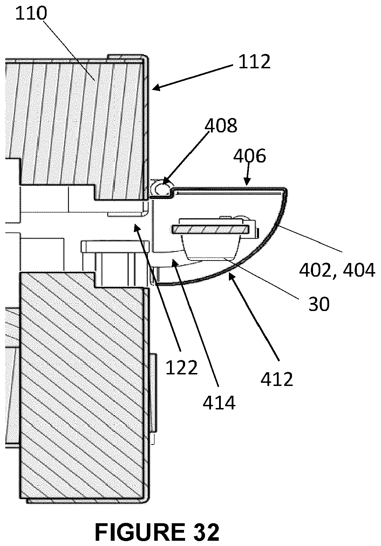

In this embodiment, the fluxer 10 includes a pre-heating compartment 402 adapted to cooperate with the furnace assembly 100 and house the crucibles 30 for pre-heating the mixture within each crucible. The pre-heating compartment 402 can be operable in a first position, or pre-heating position, for pre-heating the crucibles 30, as seen in Figures 31 and 32 for example. More specifically, the pre-heating compartment 402 can include a compartment body 404 pivotally connected to the furnace chamber 110 and being adapted to cover the crucibles 30 when in the pre-heating position. In this embodiment, the compartment body 404 covers the crucibles 30 proximate the access opening 122 such that the heat being generated by the heating elements can be transferred out of the furnace chamber 110 and into the compartment body 404 where the crucibles 30 are housed. Alternatively, or additionally, the pre-heating compartment 402 can be provided with an independent source of heat configured to raise the temperature of the interior of the compartment body 404 for pre-heating the crucibles 30.

When a crucible is placed in the pre-heating compartment, its distance from the furnace chamber can allow controlling the temperature and the heating rate. The heat transfer from the furnace chamber is reduced the further away the crucible is placed from it within the pre-heating compartment. Depending on the nature of the oxidizing agent, the positioning of the crucibles within the pre-heating compartment can therefore have an impact on the oxidizing rate of the non-oxidized and/or partially oxidized compounds. For example, in comparison to sodium nitrate, the ammonium nitrate requires a lower temperature to insure a slow and controlled decomposition. A crucible containing ammonium nitrate can therefore be placed further away from the furnace chamber, compared to a crucible containing sodium nitrate. It is understood that the optimal positioning of the crucibles containing any given oxidizing agent can be obtained by trial and error.

It should be understood that the expression "the pre-heating compartment being in heat-transfer communication with a furnace chamber" means that the pre-heating compartment and the furnace chamber are separate compartments, that can be separated by a furnace chamber door. When the crucibles are located in the pre-heating compartment, at least a portion of the heating that is received comes from heating elements located in the furnace chamber via heat transfer, through the furnace chamber door, or through air if the furnace chamber door is kept open.

The pre-heating compartment and the furnace chamber can be two separate enclosures, with the pre-heating compartment being located proximate an entrance of the furnace chamber.

However, in other embodiments, the pre-heating compartment and the furnace chamber may be a single enclosure. In such case, when a crucible is said to be positioned in the furnace chamber, it is meant that the crucible is positioned such as it is directly heated by the heating element (e.g., directly above an electric heating element or a gaz heating element). Similarly, when a crucible is said to be positioned in the pre-heating compartment, it is meant that the crucible is positioned away from the heating element(s), but such that the crucible still receives heat via heat transfer from the furnace chamber.

Once the mixture has been pre-heated, the compartment body 404 can be pivoted in a second position, or uncovered position, (seen in Figure 30), e.g., away from the access opening, to allow the support frame 210 to move forward along the rails and move the crucibles 30 into the furnace chamber 110. In this embodiment, the compartment body 404 is pivoted upwardly in order to uncover the crucibles 30, although other configurations are possible.

The compartment body 404 can have any suitable shape, size and/or configuration adapted to selectively house the crucibles 30 within an interior volume thereof. In this embodiment, the compartment body 404 has a substantially flat top surface 406 having a hinged edge 408 pivotally connected to the front wall of the furnace chamber 110. It should thus be understood that the compartment body 404 is adapted to rotate about the hinged edge 408 between the pre-heating and uncovered positions. Furthermore, the compartment body 404 has a pair of lateral surfaces 410 extending transversely at opposite ends of the top surface 406, and a curved outer surface 412 joining the lateral surfaces 410 with the top surface 406. As will be further described below, the compartment body 404 has a relatively open side through which the crucibles 30 can enter upon lowering the compartment body 404 in the pre-heating position.

As seen in Figures 32 to 34, in addition to Figure 30, each lateral surface 410 can be provided with an arcuated slot 414 adapted to receive a corresponding portion of the crucible support 212 therein upon pivoting the compartment body 404 in the pre-heating position. The slots 414 can be shaped and configured to prevent axial movement of the crucible support 212 when the crucibles 30 are housed within the compartment body 404. As such, the compartment body 404 can be adapted to effectively prevent the crucibles 30 from entering the furnace chamber 110 when in the pre-heating position. In this embodiment, the curved outer surface 412 extends between the lateral surfaces 410 and includes a leading edge 416 being substantially aligned with and spaced from the hinged edge 408 of the top surface 406. The compartment body 404 has a compartment opening 418 defined between the leading edge 416, the hinged edge 408 and both lateral surfaces 410. It should be understood that the crucibles 30 enter the compartment body 404 through the compartment opening 418 upon moving the compartment body in the pre-heating position.

In some embodiments, the top surface 406 can be substantially perpendicular to the front wall 112 of the furnace chamber 110 when the compartment body 404 is in the pre-heating position (Figure 31). However, when in the uncovered position, the top surface 406 can be parallel to and abut against the front wall (Figure 30). Therefore, it should be understood that the compartment body 404 can be adapted to rotate about 90 degrees between the pre-heating and uncovered positions, although it is appreciated that other configurations are possible. In some embodiments, the compartment body 404 can include abutments 420 configured to contact and rest on the furnace chamber 110 when in the pre-heating and/or uncovered position. For example, the compartment body 404 can include abutments 420 extending transversely from the lateral surface 410 for abutting against the front wall 112. The abutments 420 can reduce damage caused to the compartment body 404 due to repeated contact between the edges of the compartment body 404 and the furnace chamber 110, for example.

In addition, although the optional configurations as illustrated in the accompanying drawings comprise various components and although the optional configurations of the fluxer as shown may consist of certain configurations as explained and illustrated herein, not all of these components and configurations are essential and thus should not be taken in their restrictive sense, i.e. should not be taken as to limit the scope of the present disclosure. It is to be understood that other suitable components and cooperations thereinbetween, as well as other suitable configurations may be used for the fluxer, and corresponding parts, as briefly explained, and as can be easily inferred herefrom, without departing from the scope of the disclosure.

Furthermore, it should be noted that, in the preceding description, the same numerical references refer to similar elements. In addition, for the sake of simplicity and clarity, namely so as to not unduly burden the figures with several references numbers, not all figures contain references to all the components and features, and references to some components and features may be found in only one figure, and components and features of the present disclosure which are illustrated in other figures can be easily inferred therefrom. The embodiments, geometrical configurations, materials mentioned and/or dimensions shown in the figures are optional and are given for exemplification purposes only. It should also be understood that the elements of the drawings are not necessarily depicted to scale, since emphasis is placed upon clearly illustrating the elements and structures of the present embodiments, the drawings can be interpreted as being to scale but should not be limited as such.

### EXAMPLES

Experiments were conducted as follows. Three samples each containing 8 grams of lithium tetraborate were placed in platinum-gold crucibles (95-5).
- 2 grams of ammonium nitrate were added to crucible no.1;
- 2 grams of sodium nitrate were added to crucible no.2; and
- crucible no.3 was left without nitrate addition.

Using an R-type thermocouple fitted onto a data logging device, the temperature of the tetraborate or tetraborate-nitrate mixture was monitored by inserting the thermocouple directly in the mixture. Temperature measurements were recorded every second and for each experiment, with the temperature of the furnace chamber maintained at about 1000°C.

In addition to heating rates measurements, the duration of the nitrate decomposition was monitored, for crucibles nos. 1 and 2, by visually observing decomposition gasses from the nitrate component. After the experiments, the crucibles containing the nitrate-tetraborate mixture were weighed to estimate the completeness of the nitrate decomposition reaction.

Crucible no.1 was placed within the pre-heating compartment for 7 minutes, with the compartment body in the pre-heating position, and with the door of the furnace chamber kept open. Two separate experiments were conducted using the same conditions and the decomposition time of ammonium nitrate was respectively of 90 and 98 seconds. The temperature range where decomposition was observed was between 250°C and 390°C. The decomposition of ammonium nitrate was complete as we calculated a 100% loss of the nitrate addition after the heating regime. The heating rate (°C.sec⁻¹) was 1.33 and 1.32 for the respective trials.

Crucible no.2 was placed within the pre-heating compartment for 7 minutes, with the compartment body in the pre-heating position, and with the door of the furnace chamber kept open. Two separate experiments were conducted using the same conditions and decomposition was observed from the time of reaching 650°C until the end of the experiment (790°C). Decomposition was observed during more than 400 seconds in both experiments and sodium nitrate losses of 82 and 84%, respectively, were observed. The heating rate (°C.sec⁻¹) was 3.79 and 3.66 for the respective trials.

Crucible no.3 was placed directly in the furnace chamber and the temperature was monitored over time. The heating rate (°C.sec⁻¹) was much faster, and of about 6.88 and 7.70 for replicate experiments. As visual observation of decomposition gases was not possible when the crucibles were placed directly in the fusion chamber, estimating how long ammonium and sodium nitrate would have taken to decompose was performed by comparing temperature curves. The temperature curves were used to estimate how long ammonium and sodium nitrate would have taken to decompose at respectively 100% and 83%. By using the calculated losses in the nitrate-tetraborate mixture experiments and the temperature range where the nitrate decomposition was observed, it was estimated that ammonium nitrate would take only 23 seconds to fully decompose and sodium nitrate would take 30 seconds to pass the 650-790°C range where an average 83% loss has been measured in the previous experiments.

By placing the crucibles in the pre-heating compartment rather than directly in the furnace chamber, ammonium nitrate and sodium nitrate were able to decompose at a slower rate, while being exposed to lower temperatures. Using a pre-heating compartment therefore promoted a more complete oxidation of non-oxidized and/or partially oxidized compounds present in an inorganic sample, which in turn would translate in a more accurate analysis of the inorganic sample.

## Claims

1. A fluxer (10) for preparing an analytical sample by flux fusion, the fluxer (10) comprising:
a furnace chamber (110) provided with at least one heating element (20) positioned therein to heat an interior of the furnace chamber (110), the furnace chamber (110) having an access opening (122) and being configured to be heated at a fusion temperature between 800°C and 1300°C;
a sample support assembly (200) comprising:
a support frame (210); and
a crucible support (212) operatively connected to the support frame (210) for supporting at least one crucible (30), the at least one crucible (30) being adapted to receive an inorganic sample, a flux material and an oxidizing agent; and
a pre-heating compartment (402) having a compartment body (404) adapted to cooperate with the furnace chamber (110) and configured to be pre-heated to an oxidizing temperature between 150°C and 1000°C,
wherein, the pre-heating compartment (402) is operable in a pre-heating position where the compartment body (404) at least partially covers the access opening (122) of the furnace chamber (110), the compartment body (404) being shaped and sized to house the at least one crucible (30) therein such that the heat being generated by the heating elements (20) can be transferred out of the furnace chamber (110) and into the compartment body (404) via heat-transfer through the access opening when the pre-heating compartment (402) is in the pre-heating position to enable the oxidizing agent to oxidize non-oxidized and/or partially oxidized compounds present in the inorganic sample,
wherein the at least one crucible (30) is configured to be agitated and heated in the furnace chamber (110) to obtain a fused mixture, the fused mixture comprising a fused flux material having the inorganic sample solubilized therein,
wherein the fluxer (10) is an electric fluxer, and the at least one heating element (20) is an electrical heating element (20).

2. The fluxer (10) according to claim 1, wherein the compartment body (404) has a substantially flat top surface (406) pivotally connected to the furnace chamber (110), and wherein the compartment body (404) is pivotable to move the pre-heating compartment (402) between the pre-heating position and an uncovered position to uncover the access opening (122) and remove the at least one crucible (30) from within the compartment body.

3. The fluxer (10) according to claim 2, wherein the top surface comprises a hinged edge (408) pivotally connected to the furnace chamber (110).

4. The fluxer (10) according to claim 2 or 3, wherein the pre-heating compartment (402) is pivoted upwardly from the pre-heating position to move to the uncovered position.

5. The fluxer (10) according to any one of claims 2 to 4, wherein the compartment body (404) has lateral surfaces (410) connected to respective ends of the top surface and extending transversely therefrom, each lateral surface (410) being provided with a slot (414) adapted to receive a corresponding end of the crucible support (212) therein upon moving the compartment body (404) in the pre-heating position to house the at least one crucible (30).

6. The fluxer (10) according to any one of claims 2 to 5, wherein the top surface comprises a forward edge opposite and parallel to the hinged edge (408), and wherein the compartment body (404) comprises a curved outer surface (412) extending from the forward edge and joining the top and lateral surfaces (410).

7. The fluxer (10) according to claim 6, wherein the curved outer surface (412) has a leading edge (416) aligned with and spaced from the hinged edge (408), the hinged edge (408) and leading edge (416) defining a compartment opening (418) therebetween, whereby the at least one crucible (30) enters the compartment body (404) through the compartment opening (418) upon moving the compartment body (404) in the pre-heating position.

8. The fluxer (10) according to any one of claims 5 to 7, wherein the top surface is substantially perpendicular to a front wall (112) of the furnace chamber (110) when the compartment body (404) is in the pre-heating position, and wherein the compartment body (404) comprises abutments (420) adapted to contact and rest on the front wall (112) of the furnace chamber (110) when the compartment body (404) is in the pre-heating position.

9. The fluxer (10) according to any one of claims 5 to 7, wherein the top surface is substantially parallel to a front wall (112) when the compartment body (404) is in the uncovered position and wherein the compartment body (404) comprises abutments (420) adapted to contact and rest on the front wall (112) of the furnace chamber (110) when the compartment body (404) is in the pre-heating position.

10. A method for preparing an analytical sample by flux fusion using the fluxer (10) of claim 1, the method comprising:
placing a crucible (30) comprising an inorganic sample, a flux material, and an oxidizing agent therein into a pre-heating compartment (402), the pre-heating compartment (402) being in heat-transfer communication with a furnace chamber (110);
heating the crucible (30) within the pre-heating compartment (402) by heat transfer from the furnace chamber (110) to an oxidizing temperature between 150°C and 1000°C, the oxidizing temperature being lower than the fusion temperature, until sufficient heat is transferred from the furnace chamber (110) to the pre-heating compartment (402) to enable the oxidizing agent to oxidize non-oxidized and/or partially oxidized compounds present in the inorganic sample, thereby obtaining an oxidized inorganic sample;
transferring the crucible (30) comprising the flux material and the oxidized inorganic sample from the pre-heating compartment (402) to the furnace chamber (110);
heating the furnace chamber (110) to a fusion temperature between 800°C and 1300°C and agitating the crucible (30) in the furnace chamber (110) to fuse the flux material and solubilize the oxidized inorganic sample into the fused flux material, thereby obtaining a fused mixture; and
transferring the fused mixture from the crucible (30) into a container outside of the furnace chamber (110), to cool the fused mixture and obtain the analytical sample.

11. The method according to claim 10, wherein the flux material is a borate compound.

12. The method according to claim 11, wherein the borate compound is selected from a group consisting of lithium tetraborate (Li₂B₄O₇), lithium metaborate (LiBO₂), sodium tetraborate (Na₂B₄O₇) and combinations thereof.

13. The method according to any one of claims 10 to 12, wherein the analytical sample is a glass disk suitable for X-ray fluorescence (XRF) analysis, and the container is a mold into which the glass disk forms.

14. The method according to any one of claims 10 to 12, wherein the analytical sample is an acidic solution suitable for inductively coupled plasma (ICP) analysis and/or atomic absorption (AA) analysis.

15. The method according to any one of claims 10 to 14, wherein the oxidizing agent is selected from a group consisting of NH4NO3, NaNO3, KNO3, LiNO3, Sr(NO₃)₂ and combinations thereof.

## Patentansprüche

1. Fluxer (10) zur Herstellung einer analytischen Probe durch Schmelzmittelverschmelzung, wobei der Fluxer (10) umfasst:
eine Ofenkammer (110), versehen mit wenigstens einem darin angeordneten Heizelement (20), um einen Innenraum der Ofenkammer (110) zu heizen, wobei die Ofenkammer (110) eine Zugangsöffnung (122) aufweist und dafür gestaltet ist, auf eine Schmelztemperatur zwischen 800 °C und 1300 °C geheizt zu werden;
eine Probenträgerbaugruppe (200) umfassend:
einen Trägerrahmen (210); und
einen Tiegelträger (212), der funktionsfähig mit dem Trägerrahmen (210) verbunden ist, um wenigstens einen Tiegel (30) zu tragen, wobei der wenigstens eine Tiegel (30) dafür ausgelegt ist, eine anorganische Probe, ein Schmelzmittelmaterial und ein Oxidationsmittel aufzunehmen; und
eine Vorheizkammer (402) mit einem Kammerkörper (404), dafür ausgelegt, mit der Ofenkammer (110) zusammenzuwirken und dafür gestaltet, auf eine Oxidationstemperatur zwischen 150 °C und 1000 °C vorgeheizt zu werden,
wobei die Vorheizkammer (402) in einer Vorheizstellung betreibbar ist, bei der der Kammerkörper (404) die Zugangsöffnung (122) der Ofenkammer (110) wenigstens teilweise bedeckt, wobei der Kammerkörper (404) geformt und bemessen ist, den wenigstens einen Tiegel (30) darin aufzunehmen, so dass die von den Heizelementen (20) erzeugte Wärme über Wärmeübertragung durch die Zugangsöffnung aus der Ofenkammer (110) hinaus und in den Kammerkörper (404) hinein übertragen werden kann, wenn sich die Vorheizkammer (402) in der Vorheizstellung befindet, um zu ermöglichen, dass das Oxidationsmittel nicht oxidierte und/oder teilweise oxidierte Verbindungen, die in der anorganischen Probe vorhanden sind, oxidiert,
wobei der wenigstens eine Tiegel (30) dafür gestaltet ist, in der Ofenkammer (110) bewegt und erhitzt zu werden, um ein verschmolzenes Gemisch zu erhalten, wobei das verschmolzene Gemisch ein verschmolzenes Schmelzmittelmaterial mit der anorganischen Probe darin solubilisiert umfasst,
wobei der Fluxer (10) ein elektrischer Fluxer ist und das wenigstens eine Heizelement (20) ein elektrisches Heizelement (20) ist.

2. Fluxer (10) gemäß Anspruch 1, wobei der Kammerkörper (404) eine im Wesentlichen flache obere Fläche (406) aufweist, die schwenkbar mit der Ofenkammer (110) verbunden ist, und wobei der Kammerkörper (404) schwenkbar ist, um die Vorheizkammer (402) zwischen der Vorheizstellung und einer aufgedeckten Stellung zu bewegen, um die Zugangsöffnung (122) aufzudecken und den wenigstens einen Tiegel (30) aus dem Kammerkörper zu entfernen.

3. Fluxer (10) gemäß Anspruch 2, wobei die obere Fläche eine klappbare Kante (408) umfasst, die schwenkbar mit der Ofenkammer (110) verbunden ist.

4. Fluxer (10) gemäß Anspruch 2 oder 3, wobei die Vorheizkammer (402) von der Vorheizstellung nach oben geschwenkt wird, um sich in die aufgedeckte Stellung zu bewegen.

5. Fluxer (10) gemäß einem der Ansprüche 2 bis 4, wobei der Kammerkörper (404) Seitenflächen (410) aufweist, die mit entsprechenden Enden der oberen Fläche verbunden sind und sich quer davon erstrecken, wobei jede Seitenfläche (410) mit einem Schlitz (414) versehen ist, der dafür ausgelegt ist, ein entsprechendes Ende des Tiegelträgers (212) darin aufzunehmen, wenn sich der Kammerkörper (404) in die Vorheizstellung bewegt, um den wenigstens einen Tiegel (30) aufzunehmen.

6. Fluxer (10) gemäß einem der Ansprüche 2 bis 5, wobei die obere Fläche eine Vorderkante gegenüber und parallel zu der klappbaren Kante (408) aufweist und wobei der Kammerkörper (404) eine gekrümmte Außenfläche (412) umfasst, die von der Vorderkante ausgeht und die obere und die Seitenflächen (410) verbindet.

7. Fluxer (10) gemäß Anspruch 6, wobei die gekrümmte Außenfläche (412) eine Vorderkante (416) aufweist, die gegenüber der klappbaren Kante (408) ausgerichtet und davon beabstandet ist, wobei die klappbare Kante (408) und die Vorderkante (416) eine Kammeröffnung (418) dazwischen definieren, wobei der wenigstens eine Tiegel (30) bei Bewegen des Kammerkörpers (404) in die Vorheizstellung durch die Kammeröffnung (418) in den Kammerkörper (404) eintritt.

8. Fluxer (10) gemäß einem der Ansprüche 5 bis 7, wobei die obere Fläche im Wesentlichen senkrecht zu einer Vorderwand (112) der Ofenkammer (110) ist, wenn sich der Kammerkörper (404) in der Vorheizstellung befindet, und wobei der Kammerkörper (404) Anschläge (420) umfasst, die zum Kontakt mit und Ruhen an der Vorderwand (112) der Ofenkammer (110), wenn sich der Kammerkörper (404) in der Vorheizstellung befindet, ausgelegt sind.

9. Fluxer (10) gemäß einem der Ansprüche 5 bis 7, wobei die obere Fläche im Wesentlichen parallel zu einer Vorderwand (112) ist, wenn sich der Kammerkörper (404) in der aufgedeckten Stellung befindet, und wobei der Kammerkörper (404) Anschläge (420) umfasst, die zum Kontakt mit und Ruhen an der Vorderwand (112) der Ofenkammer (110), wenn sich der Kammerkörper (404) in der Vorheizstellung befindet, ausgelegt sind.

10. Verfahren zur Herstellung einer analytischen Probe durch Schmelzmittelverschmelzung unter Verwendung des Fluxers (10) gemäß Anspruch 1, wobei das Verfahren umfasst:
Platzieren eines Tiegels (30), der eine anorganische Probe, ein Schmelzmittelmaterial und ein Oxidationsmittel darin umfasst, in eine Vorheizkammer (402), wobei sich die Vorheizkammer (402) in Wärmeübertragungsverbindung mit einer Ofenkammer (110) befindet;
Erhitzen des Tiegels (30) in der Vorheizkammer (402) durch Wärmeübertragung aus der Ofenkammer (110) auf eine Oxidationstemperatur zwischen 150 °C und 1000 °C, wobei die Oxidationstemperatur niedriger als die Schmelztemperatur ist, bis ausreichend Wärme aus der Ofenkammer (110) in die Vorheizkammer (402) überführt ist, um zu ermöglichen, dass das Oxidationsmittel nicht oxidierte und/oder teilweise oxidierte Verbindungen, die in der anorganischen Probe vorhanden sind, oxidiert, um eine oxidierte anorganische Probe zu erhalten;
Überführen des Tiegels (30), der das Schmelzmittelmaterial und die oxidierte anorganische Probe umfasst, von der Vorheizkammer (402) in die Ofenkammer (110);
Erhitzen der Ofenkammer (110) auf eine Schmelztemperatur zwischen 800 °C und 1300 °C und Bewegen des Tiegels (30) in der Ofenkammer (110), um das Schmelzmittelmaterial zu schmelzen und die oxidierte anorganische Probe in dem geschmolzenen Schmelzmittelmaterial zu solubilisieren, um ein verschmolzenes Gemisch zu erhalten; und
Überführen des verschmolzenen Gemischs von dem Tiegel (30) in einen Behälter außerhalb der Ofenkammer (110), um das verschmolzene Gemisch abzukühlen und die analytische Probe zu erhalten.

11. Verfahren gemäß Anspruch 10, wobei das Schmelzmittelmaterial eine Boratverbindung ist.

12. Verfahren gemäß Anspruch 11, wobei die Boratverbindung ausgewählt ist aus einer Gruppe bestehend aus Lithiumtetraborat (Li2B4O7), Lithiummetaborat (LiBO₂), Natriumtetraborat (Na₂B₄O₇) und Kombinationen davon.

13. Verfahren gemäß einem der Ansprüche 10 bis 12, wobei die analytische Probe eine Glasscheibe ist, die für Röntgenfluoreszenzanalyse (XRF) geeignet ist, und der Behälter eine Gussform ist, in der sich die Glasscheibe bildet.

14. Verfahren gemäß einem der Ansprüche 10 bis 12, wobei die analytische Probe eine saure Lösung ist, die für Analyse durch induktiv gekoppeltes Plasma (ICP) und/oder Atomabsorptionsanalyse (AA) geeignet ist.

15. Verfahren gemäß einem der Ansprüche 10 bis 14, wobei das Oxidationsmittel ausgewählt ist aus einer Gruppe bestehend aus NH4NO3, NaNO3, KNO3, LiNO3, Sr(NO₃)₂ und Kombinationen davon.

## Revendications

1. Fluxeur (10) destiné à préparer un échantillon analytique par fusion de flux, le fluxeur (10) comprenant :
une chambre de four (110) pourvue d'au moins un élément chauffant (20) positionné dans celle-ci pour chauffer un intérieur de la chambre de four (110), la chambre de four (110) ayant une ouverture d'accès (122) et étant configurée pour être chauffée à une température de fusion comprise entre 800 °C et 1300 °C ;
un ensemble support d'échantillon (200) comprenant :
un châssis de support (210) ; et
un support de creusets (212) fonctionnellement relié au châssis de support (210) pour supporter au moins un creuset (30), l'au moins un creuset (30) étant adapté pour recevoir un échantillon inorganique, un flux et un oxydant ; et
un compartiment de préchauffage (402) ayant un corps de compartiment (404) adapté pour coopérer avec la chambre de four (110) et configuré pour être préchauffé jusqu'à une température d'oxydation comprise entre 150 °C et 1000 °C,
dans lequel le compartiment de préchauffage (402) est utilisable dans une position de préchauffage où le corps de compartiment (404) recouvre au moins partiellement l'ouverture d'accès (122) de la chambre de four (110), le corps de compartiment (404) étant façonné et dimensionné pour y accueillir l'au moins un creuset (30) de telle sorte que la chaleur générée par les éléments chauffants (20) peut être transférée hors de la chambre de four (110) et à l'intérieur du corps de compartiment (404) par transfert de chaleur par l'ouverture d'accès quand le compartiment de préchauffage (402) est dans la position de préchauffage pour permettre à l'oxydant d'oxyder des composés non oxydés et/ou partiellement oxydés présents dans l'échantillon inorganique,
dans lequel l'au moins un creuset (30) est configuré pour être agité et chauffé dans la chambre de four (110) pour obtenir un mélange fondu, le mélange fondu comprenant un flux fondu dans lequel est solubilisé l'échantillon inorganique,
le fluxeur (10) étant un fluxeur électrique, et l'au moins un élément chauffant (20) étant un élément chauffant électrique (20).

2. Fluxeur (10) selon la revendication 1, dans lequel le corps de compartiment (404) a une surface supérieure sensiblement plate (406) reliée avec faculté de pivotement à la chambre de four (110), et dans lequel on peut faire pivoter le corps de compartiment (4) pour déplacer le compartiment de préchauffage (402) entre la position de préchauffage et une position découverte pour découvrir l'ouverture d'accès (122) et retirer l'au moins un creuset (30) de l'intérieur du corps de compartiment.

3. Fluxeur (10) selon la revendication 2, dans lequel la surface supérieure comprend un bord articulé (408) relié avec faculté de pivotement à la chambre de four (110) .

4. Fluxeur (10) selon la revendication 2 ou 3, dans lequel on fait pivoter le compartiment de préchauffage (402) vers le haut depuis la position de préchauffage pour le déplacer jusqu'à la position découverte.

5. Fluxeur (10) selon l'une quelconque des revendications 2 à 4, dans lequel le corps de compartiment (404) a des surfaces latérales (410) reliées à des extrémités respectives de la surface supérieure et s'étendant transversalement depuis celles-ci, chaque surface latérale (410) étant pourvue d'une fente (414) adaptée pour y recevoir une extrémité correspondante du support de creuset (212) lors du déplacement du corps de compartiment (404) dans la position de préchauffage pour accueillir l'au moins un creuset (30).

6. Fluxeur (10) selon l'une quelconque des revendications 2 à 5, dans lequel la surface supérieure comprend un bord avant opposé et parallèle au bord articulé (408), et dans lequel le corps de compartiment (404) comprend une surface externe incurvée (412) s'étendant depuis le bord avant et reliant les surfaces supérieure et latérales (410).

7. Fluxeur (10) selon la revendication 6, dans lequel la surface externe incurvée (412) a un bord d'attaque (416) aligné avec le et espacé du bord articulé (408), le bord articulé (408) et le bord d'attaque (416) définissant entre eux une ouverture de compartiment (418), moyennant quoi l'au moins un creuset (30) entre dans le corps de compartiment (404) par l'ouverture de compartiment (418) lors du déplacement du corps de compartiment (404) dans la position de préchauffage.

8. Fluxeur (10) selon l'une quelconque des revendications 5 à 7, dans lequel la surface supérieure est sensiblement perpendiculaire à une paroi avant (112) de la chambre de four (110) quand le corps de compartiment (404) est dans la position de préchauffage, et dans lequel le corps de compartiment (404) comprend des butées (420) adaptées pour toucher et reposer sur la paroi avant (112) de la chambre de four (110) quand le corps de compartiment (404) est dans la position de préchauffage.

9. Fluxeur (10) selon l'une quelconque des revendications 5 à 7, dans lequel la surface supérieure est sensiblement perpendiculaire à une paroi avant (112) quand le corps de compartiment (404) est dans la position découverte et dans lequel le corps de compartiment (404) comprend des butées (420) adaptées pour toucher et reposer sur la paroi avant (112) de la chambre de four (110) quand le corps de compartiment (404) est dans la position de préchauffage.

10. Procédé destiné à préparer un échantillon analytique par fusion de flux au moyen du fluxeur (10) de la revendication 1, le procédé comprenant :
la mise en place d'un creuset (30) renfermant un échantillon inorganique, un flux et un oxydant à l'intérieur d'un compartiment de préchauffage (402), le compartiment de préchauffage (402) étant en communication de transfert de chaleur avec une chambre de four (110) ;
le chauffage du creuset (30) à l'intérieur du compartiment de préchauffage (402) par transfert de chaleur depuis la chambre de four (110) jusqu'à une température d'oxydation comprise entre 150 °C et 1000 °C, la température d'oxydation étant inférieure à la température de fusion, jusqu'à ce que suffisamment de chaleur soit transférée de la chambre de four (110) au compartiment de préchauffage (402) pour permettre à l'oxydant d'oxyder des composés non oxydés et/ou partiellement oxydés présents dans l'échantillon inorganique, pour obtenir ainsi un échantillon inorganique oxydé ;
le transfert du creuset (30) comprenant le flux et l'échantillon inorganique oxydé du compartiment de préchauffage (402) à la chambre de four (110) ;
le chauffage de la chambre de four (110) jusqu'à une température de fusion comprise entre 800 °C et 1300 °C et l'agitation du creuset (30) dans la chambre de four (110) pour faire fondre le flux et solubiliser l'échantillon inorganique oxydé à l'intérieur du flux fondu, pour obtenir ainsi un mélange fondu ; et
le transfert du mélange fondu depuis le creuset (30) à l'intérieur d'un récipient à l'extérieur de la chambre de four (110), pour refroidir le mélange fondu et obtenir l'échantillon analytique.

11. Procédé selon la revendication 10, dans lequel le flux est un composé de borate.

12. Procédé selon la revendication 11, dans lequel le composé de borate est choisi dans un groupe constitué par le tétraborate de lithium (Li₂B₄O₇), le métaborate de lithium (LiBO₂), le tétraborate de sodium (Na₂B₄O₇) et les combinaisons de ceux-ci.

13. Procédé selon l'une quelconque des revendications 10 à 12, dans lequel l'échantillon analytique est un disque de verre approprié pour une analyse par fluorescence aux rayons X (XRF), et le récipient est un moule à l'intérieur duquel se forme le disque de verre.

14. Procédé selon l'une quelconque des revendications 10 à 12, dans lequel l'échantillon analytique est une solution acide appropriée pour une analyse par plasma à couplage inductif (ICP) et/ou une analyse par absorption atomique (AA).

15. Procédé selon l'une quelconque des revendications 10 à 14, dans lequel l'oxydant est choisi dans un groupe constitué par NH₄NO₃, NaNO₃, KNO₃, LiNO₃, Sr (NO₃) ₂ et les combinaisons de ceux-ci.
